(19)

Europäisches
Patentamt
European
Patent Office
Office européen
des brevets

(11) **EP 2 345 991 A1**

(12) **EUROPEAN PATENT APPLICATION**
published in accordance with Art. 153(4) EPC

(43) Date of publication:
 **20.07.2011  Bulletin 2011/29**

(21) Application number: **09823252.3**

(22) Date of filing: **19.10.2009**

(51) Int Cl.:
 **G06Q 50/00** *(2006.01)*     **H02J 3/00** *(2006.01)*

(86) International application number:
 **PCT/JP2009/005439**

(87) International publication number:
 **WO 2010/050138 (06.05.2010 Gazette 2010/18)**

(84) Designated Contracting States:
 **AT BE BG CH CY CZ DE DK EE ES FI FR GB GR
 HR HU IE IS IT LI LT LU LV MC MK MT NL NO PL
 PT RO SE SI SK SM TR**
 Designated Extension States:
 **AL BA RS**

(30) Priority:  **27.10.2008  JP 2008275747**

(71) Applicant: **Omron Corporation
 Kyoto-shi, Kyoto 600-8530 (JP)**

(72) Inventors:
 • **TSURUTA, Kosuke
   Kyoto-shi, Kyoto 600-8530 (JP)**

 • **IWAMI, Taro
   Kyoto-shi, Kyoto 600-8530 (JP)**
 • **INABA, Hironori
   Kyoto-shi, Kyoto 600-8530 (JP)**
 • **OHTANI, Satoshi
   Kyoto-shi, Kyoto 600-8530 (JP)**

(74) Representative: **Wilhelms · Kilian & Partner
 Patentanwälte
 Eduard-Schmid-Straße 2
 81541 München (DE)**

(54) **AMOUNT-OF-ROOM-FOR-IMPROVEMENT CALCULATION APPARATUS, METHOD FOR
 CONTROLLING SAME, AND AMOUNT-OF-ROOM-FOR-IMPROVEMENT CALCULATION
 PROGRAM**

(57)     An energy consumption improvement calculation apparatus calculates an amount of room-for-improvement that is an improvable amount of power consumption of at least one target device. A cycle use section (42) of the energy consumption improvement calculation apparatus uses measured values (E') and measurement times (t') of power consumption and a fluctuating cycle ($\alpha$cycle) of power consumption which fluctuates periodically. The cycle use section (42) includes: a phase determining section (62) for determining a phase (1) of the measurement time (t') with respect to one cycle; a table generating section (63) for calculating a reference value which is an average of plural ones of the measured values (E') measured at measurement times (t') corresponding to the phase (1) and generating a correspondence table (65) between each phase and the reference value; and a subtraction section (64) for subtracting, from a measured value (E') measured at a given measurement time, a reference value corresponding to a phase of the given measurement time and obtained by the phase determining section (62) and the correspondence table (65). The subtraction result gives the amount of room-for-improvement ($\Delta Ec$) at the given measurement time (t').

FIG. 1

EP 2 345 991 A1

**Description**

Technical Field

The present invention relates to: an energy consumption improvement calculation apparatus that calculates an amount of room-for-improvement that is an improvable amount of energy consumption of a target device; a method for controlling the energy consumption improvement calculation apparatus; and an energy consumption improvement calculation program.

Background Art

Recently, in the industrial world, there has been requested a reduction in the amount of power consumption (energy consumption) of electronic apparatuses used in production (such reduction is hereinafter referred to as "energy conservation") in order to reduce the production costs. Further, in order to deal with the global warming issue, there has been requested energy conservation at the national level. In Japan, such requests have resulted in revision of the Act on the Rational Use of Energy. As a result of this revision, it is expected that more number of factories, workplaces etc. will be targets of the Act.

A facility which is the target of the Act on the Rational Use of Energy (hereinafter "target facility") is obliged to appoint a person in charge of energy conservation (energy manager) and to periodically report the status of energy use etc. The person in charge is obliged to continuously make energy conservation measures, Specifically, the person in charge is obliged to comprehend and analyze the current status of the target facility and set a goal for energy conservation, proposes the goal to a manager in charge of equipment in the target facility, and the manager is obliged to repeatedly implement the proposed goal in the facility.

However, facilities such as factories have a large number of electronic apparatuses, and so it is difficult to determine which of the electronic apparatuses should be operated to what extent in order to reduce the power consumption as a whole. A specialist skilled in energy conservation experientially knows how the power consumptions of individual electronic devices are influenced by relationships between individual electronic devices and how to interpret such influences, and experientially knows various measures to reduce the amount of power consumption. Therefore, if the person in charge is such a specialist, the person can observe the target facility and specify an electronic apparatus whose power consumption is to be reduced, and advise the manager in charge of equipment in the target facility how to reduce the power consumption accordingly.

However, such specialists are limited in number, and so cannot be positioned as the person in charge in every facility. Further, training such specialists is time-consuming and cost-consuming. Therefore, there is requested an energy conservation assisting system which enables the person in charge to carry out improvement in terms of energy conservation regardless of whether the person has special knowledge in energy conservation.

Specifically, in order that the person in charge determines what part of the data of the amount of power consumption measured by measuring devices in the object facility is to be referred to in what manner, the person is required to have special knowledge. Further, if the target facility is a factory etc., the target facility has a large number of measuring devices for power consumption, which makes the data of the amount of power consumption very large. For example, in a case where 300 measuring devices measure the amount of power consumption every 10 minutes, the number of data of the amount of power consumption per 1 month is approximately 1,200,000, Analyzing such a large number of data would require much time, making it difficult to take effective and endurable energy conservation measures. Accordingly, there is requested an energy conservation assisting system which automatically picks out a device with a room-for-improvement of power consumption by using a large number of data of the amount of power consumption measured with respect to each device.

A known example of such an energy conservation assisting system is an energy etc. consumption calculating system disclosed in Patent Literature 1 below. The energy etc. consumption calculating system obtains the amount of energy etc. consumption with respect to each wiring etc., and outputs a time period when power is considered to have been consumed wastefully and the amount of wasteful power consumption based on (i) information in which the obtained data is associated with a time when power was consumed and (ii) a schedule in which a time period when energy etc. may be used and a time period when energy etc. may not be used are determined with respect to each wiring etc.

Citation List

[Patent Literature]

[Patent Literature 1]

Japanese Patent Application Publication, Tokukai No. 2007-172406 (published on July 5, 2007)

Summary of Invention

Technical Problem

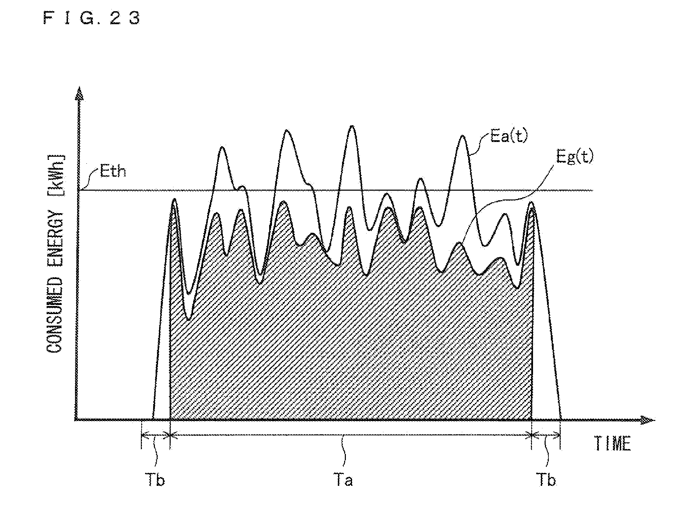

Fig. 23 is a graph illustrating a time period where energy is considered to have been consumed wastefully and the amount of wasteful energy consumption in the system disclosed in Patent Literature 1. In the graph, a change in time of actual energy consumption Ea is indicated by a solid line, and a region corresponding to a change in time of desired energy consumption is indicated by a dashed line. In the graph, a change in time of actual energy consumption Ea(t) and a change in time of desired energy consumption Eg(t) are shown. A region between the graph of a change in time of the desired energy consumption Eg(t) and a temporal axis is hatched.

As illustrated in Fig. 23, in the system disclosed in Patent Literature 1, a time period Tb which is other than a time period Ta when energy may be used is considered as a time period when energy is used wastefully, and energy consumption at the time period Tb is considered as the amount of wasteful energy consumption. Consequently, in the system disclosed in Patent Literature 1, it is impossible to obtain the amount of wasteful energy consumption in the time period Ta when energy may be used.

There is a well-known process for setting a threshold for energy consumption and regarding energy consumption beyond the threshold, as wasteful energy consumption. A thin line in Fig. 23 indicates a threshold Eth for energy consumption. As illustrated in the drawing, the process enables calculating wasteful power consumption in the time period Ta when energy may be used. However, as is seen from Fig. 23, a room-for-improvement (Ea(t)-Eg(t)) of energy consumption still remains in a region below the threshold.

The present invention was made in view of the foregoing problems. An object of the present invention is accurately calculating an improvable amount of energy consumption.

Solution to Problem

In general, energy consumption of a device varies depending on the operating condition of the device. The operating condition varies according to, for example, what time period it is operating in, what day of the week it is on, whether it is on a specific day or not, whether it is on the first ten days, the middle ten days, or the last ten days of the month, and what season it is in. Consequently, it is expected that the operating condition varies periodically, and similarly it is expected that energy consumption of the device varies periodically.

In order to solve the foregoing problems, an energy consumption improvement calculation apparatus of the present invention is an apparatus for calculating an amount of room-for-improvement in energy consumption of a target device, the amount of room-for-improvement being an amount of energy consumption by which the energy consumption of the target device is improvable, including: a storage section that stores measured values of the energy consumption, measurement times at which the measured values were measured, and a fluctuating cycle in which the energy consumption varies periodically; a phase obtainer that obtains a phase of the measurement times corresponding to the fluctuating cycle; a reference value obtainer that obtains a reference value which is a representing value of plural ones of the measured values which ones were measured at measurement times corresponding to the phase obtained by the phase obtainer; and an amount-of-room-for-improvement calculator that calculates an amount of room-for-improvement of energy consumption at a given measurement, time stored in the storage section by subtracting, from a measured value measured at the given measurement time, a reference value which corresponds to a phase of the given measurement time, the given reference value being obtained by the phase obtainer and the reference value obtainer.

Further, in order to solve the foregoing problems, a method of the present invention for controlling an energy consumption improvement calculation apparatus is a method for controlling an energy consumption improvement calculation apparatus that calculates an amount of room-for-improvement in energy consumption of a target device, the amount of room-for-improvement being an amount of energy consumption by which the energy consumption of the target device is improvable, the energy consumption improvement calculation apparatus including a storage section that stores measured values of the energy consumption and measurement times at which the measured values were measured, the method comprising the steps of: (i) obtaining a phase of the measurement times with respect to a fluctuating cycle in which the energy consumption varies periodically, the fluctuating cycle being stored in the storage section; (ii) obtaining a reference value which is a representing value of plural ones of the measured values which ones were measured at measurement times corresponding to the phase obtained in the step (i); and (iii) calculating an amount of room-for-improvement of energy consumption at a given measurement time stored in the storage section by subtracting, from a measured value measured at the given measurement time, a reference value which corresponds to a phase of the given measurement time, the given reference value being obtained in the steps (i) and (ii).

Examples of the representing value include an average, a lowest value, a central value, and a mode value.

With the apparatus and the method, a phase of a measurement time corresponding to a fluctuating cycle is obtained, a representing value of measured values measured at measurement times corresponding to the phase is obtained as a reference value, a given reference value corresponding to a phase of a given measurement time is subtracted from a measured value measured at the given measurement time, and the subtraction result gives the amount of room-for-improvement at the given measurement time. Since the present invention is designed such that different reference values are provided according to a periodic fluctuation unlike a conventional art using a fixed threshold, the present invention enables accurately calculating an improvable amount of energy consumption.

The phase obtainer may obtain the phase of the measurement time corresponding to the fluctuating cycle by calculation based on the fluctuating cycle and the measurement time, or may obtain the phase from a correspondence table which is generated beforehand based on the fluctuating cycle and which indicates a correspondence between the measurement time and the phase.

It is preferable to arrange the energy consumption improvement calculation apparatus such that the reference value obtainer causes a phase of the fluctuating cycle and a reference value corresponding to the phase to be stored in the storage section in relation to the phase of the fluctuating cycle. Since the phase and the reference value are stored in the storage section in relation to the phase of the fluctuating cycle, the amount-of-room-for-improvement calculator is only required to obtain from the storage section a reference value corresponding to a phase of a given measurement time which is obtained by the phase obtainer, so that the amount-of-room-for-improvement calculator can quickly calculate the amount of room-for-improvement at the given measurement time.

There is a case where a plurality of different fluctuating cycles are provided with respect to one target device. In this case, the storage section stores therein a plurality of the fluctuating cycles that differ from each other, and the phase obtainer, the reference value obtainer, and the amount-of-room-for-improvement calculator operate with respect to each of the plurality of different fluctuating cycles.

Further, energy consumption during a period other than a planned time that defines a period when the target device is planned to operate is considered to be wasteful energy consumption as described in Patent Literature 1, i.e. the amount of room-for-improvement of energy consumption. Accordingly, in a case where the planned time is set, it is unnecessary to apply the present invention in order to obtain the reference value and subtract the reference value from the measured value during a period other than the planned time.

Accordingly, it is preferable to arrange the energy consumption improvement calculation apparatus such that the phase obtainer, the reference value obtainer, and the amount-of-room-for-improvement calculator operate only with respect to a measurement time in a planned time that defines a period during which the one target device is planned to operate. Some target devices operate for 24 hours and so the planned time is not set to such target devices. Also in such a case, it is possible to calculate the amount of room-for-improvement by applying the present invention.

It is preferable to arrange the energy consumption improvement calculation apparatus so as to further include: one or a plurality of other index users that calculate the amount of room-for-improvement of energy consumption at the given measurement time based on an index other than the fluctuating cycle; and a selector that selects, as the amount of room-for-improvement of energy consumption at the given measurement time, a largest amount among an amount of room-for-improvement of energy consumption calculated by each of the one or a plurality of other index users and the amount of room-for-improvement of energy consumption calculated by the amount-of-room-for-improvement calculator. With the arrangement, the largest amount among the plurality of amounts of room-for-improvement which are calculated based on a plurality of indices is selected, so that it is possible to accurately calculate an improvable amount of energy consumption.

Examples of the index other than the fluctuating cycle include the planned time, a variation from an average, and a rated value. How to calculate the amount of room-for-improvement based on the index other than the fluctuating cycle will be detailed in Embodiments.

It is preferable to arrange the energy consumption improvement calculation apparatus so as to further include a total-amount-of-room-for-improvement calculator for calculating a total amount of room-for-improvement of energy consumption corresponding to a sum obtained by summing the largest amount selected by the selector with respect to each measurement time in a specified period. When the total amount of room-for-improvement of energy consumption as well as the energy consumption are shown to a user, it is possible for the user to comprehend to what extent the energy consumption is improvable.

The specified period may be specified by the user's input via an input section, or may be stored in the storage section beforehand. Further, amounts of room-for-improvement based on a certain index at all the measurement times in the specified period may be summed up, and this calculation may be made for each index. In this case, a user can comprehend what percentage of the energy consumption the amounts of room-for-improvement based on individual indices occupy.

It is preferable to arrange the energy consumption improvement calculation apparatus such that the target device includes a plurality of target devices, the phase obtainer, the reference value obtainer, the amount-of-room-for-improvement calculator, the one or a plurality of other index users, the selector, and the total-amount-of-room-for-improvement calculator operate with respect to each of the plurality of target devices, and the energy consumption improvement calculation apparatus further comprises a list generator that generates a list in which device identification information items respectively identifying the plurality of target devices are listed in an order of largeness of the total amount of room-for-improvement of energy consumption calculated by the total-amount-of-room-for-improvement calculator for each of the target devices.

With the arrangement, when the generated list is shown to a user, it is possible for the user to recognize which target device has a large amount of room-for-improvement of energy consumption, enabling the user to improve energy consumption of that target device so as to efficiently attain energy conservation. The device identification information items may be device names or numbers assigned to individual devices.

An energy consumption improvement calculation program can cause a computer to execute individual steps carried out by the energy consumption improvement calculation apparatus. Further, by causing the energy consumption improvement calculation program to be stored in a computer-readable storage medium, it is possible to execute the energy consumption improvement calculation program on any computer.

Advantageous Effects of Invention

As described above, the energy consumption improvement calculation apparatus of the present invention subtracts, from a measured value at a given measurement time, a reference value corresponding to a phase of the given measurement time so that the subtraction result gives the amount of room-for-improvement of energy consumption at the given measurement time. This enables setting different reference values according to a fluctuating cycle, unlike a conventional art using a fixed threshold. Accordingly, the energy consumption improvement calculation apparatus of the present invention enables accurately calculating the amount of room-for-improvement of energy consumption.

Brief Description of Drawings

Fig. 1

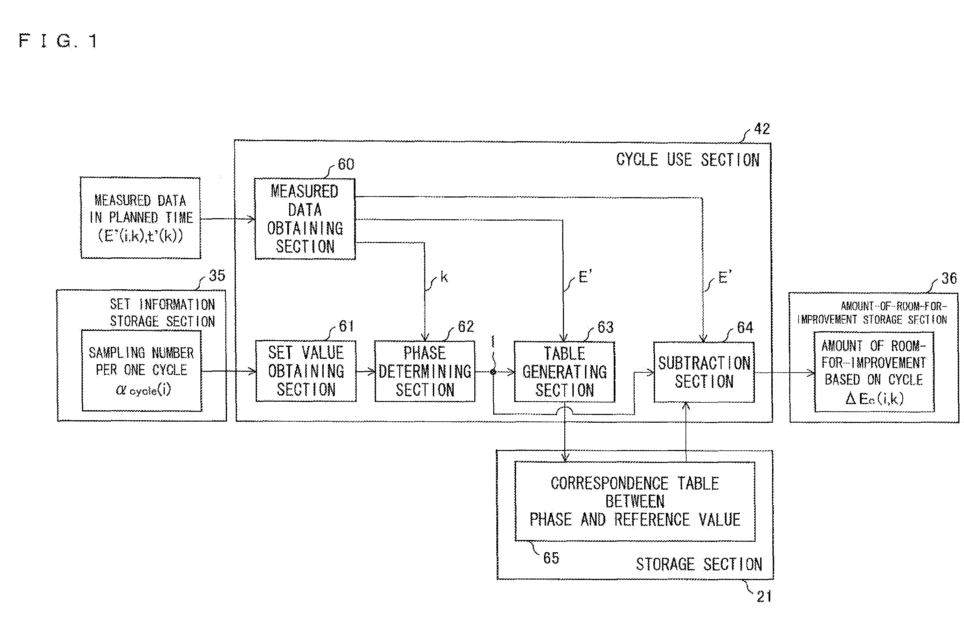

Fig. 1 is a block diagram schematically illustrating a configuration of a cycle use section of an amount-of-room-for-improvement calculation section in a control section of an energy consumption improvement calculation apparatus in accordance with one embodiment of the present invention.
Fig. 2

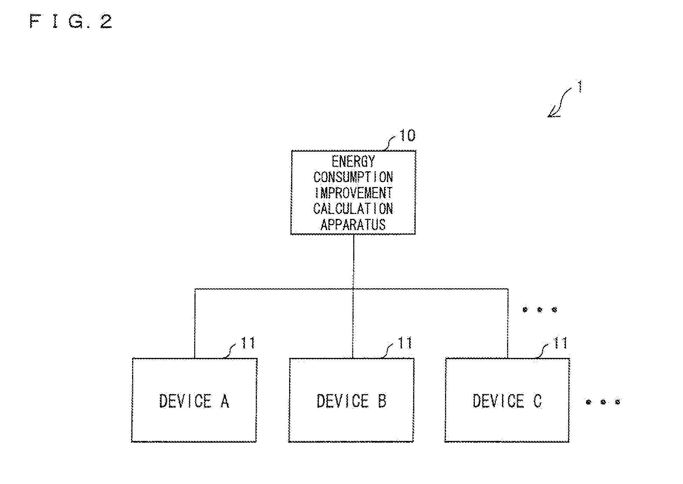

Fig. 2 is a block diagram schematically illustrating a configuration of an energy conservation assisting system including the energy consumption improvement calculation apparatus.
Fig. 3

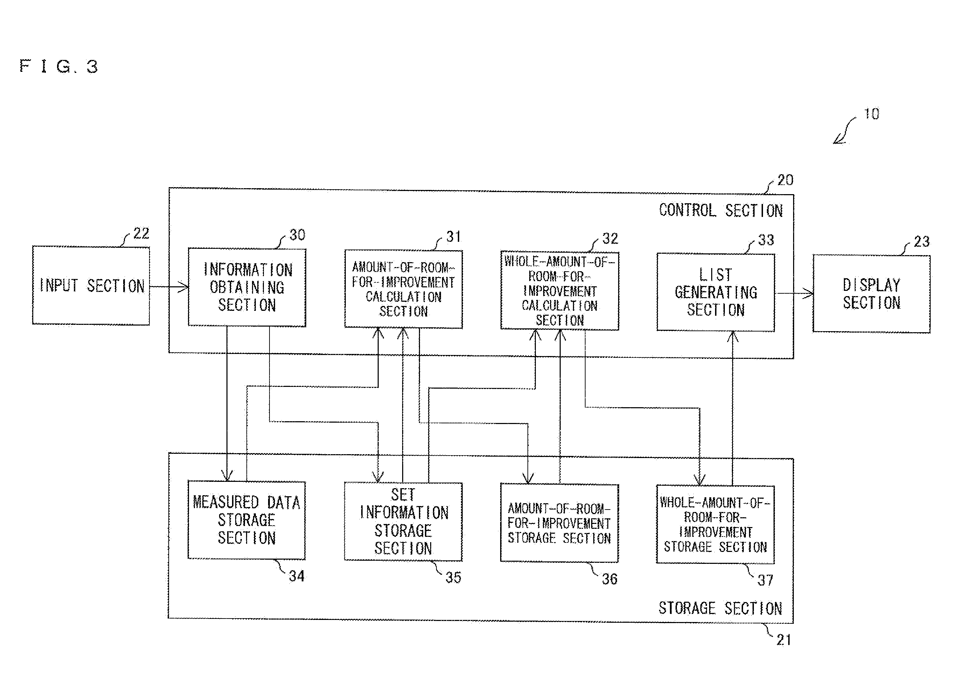

Fig. 3 is a block diagram schematically illustrating a configuration of the energy consumption improvement calculation apparatus.
Fig. 4

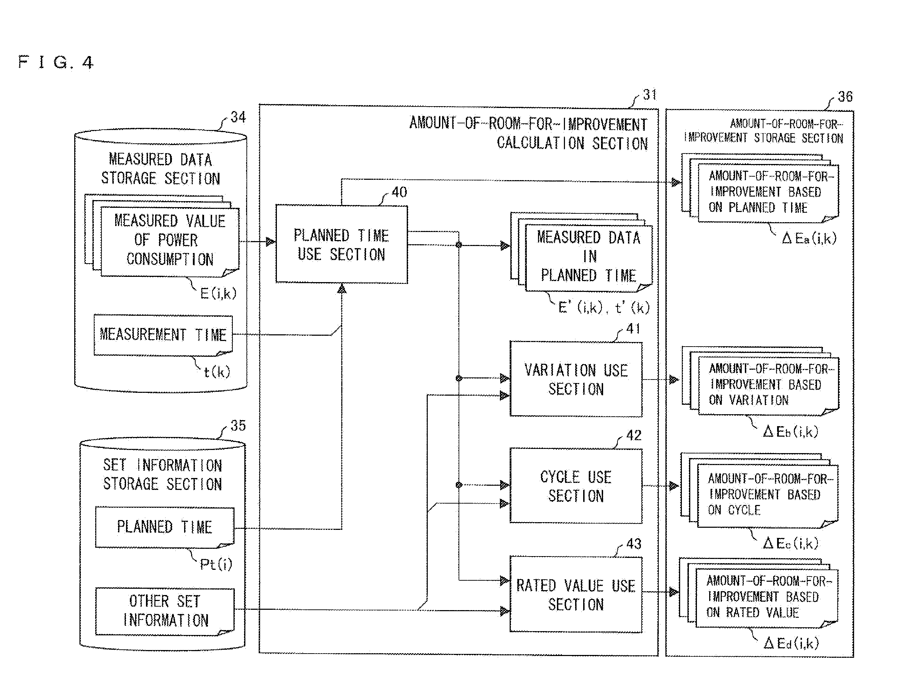

Fig. 4 is a block diagram schematically illustrating a configuration of the amount of-room-for-improvement calculation section.
Fig. 5

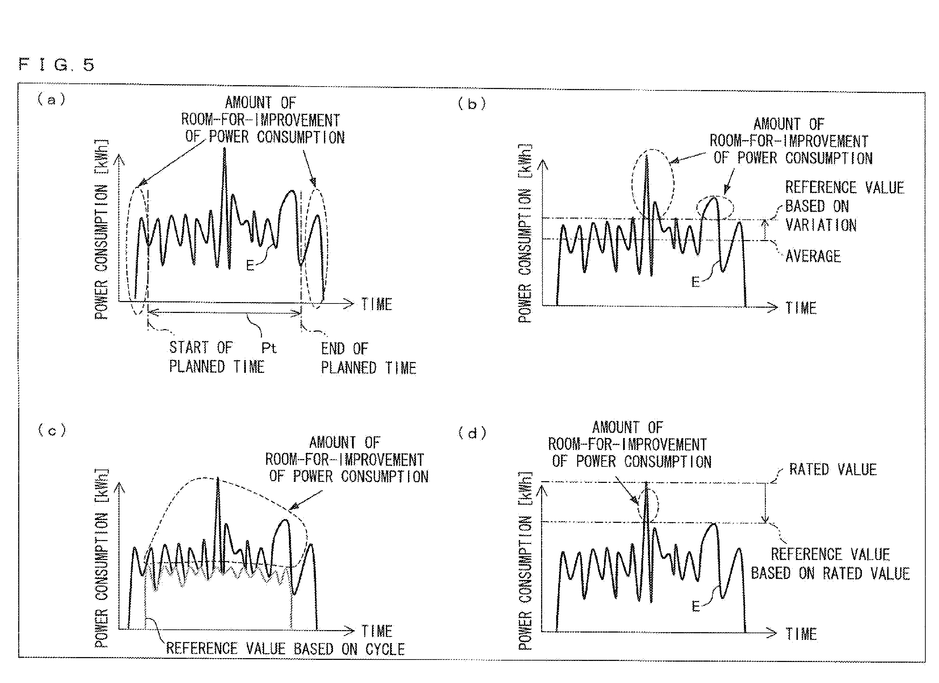

Fig. 5 is a graph illustrating four indices used in the amount-of-room-for-improvement calculation section.
Fig. 6

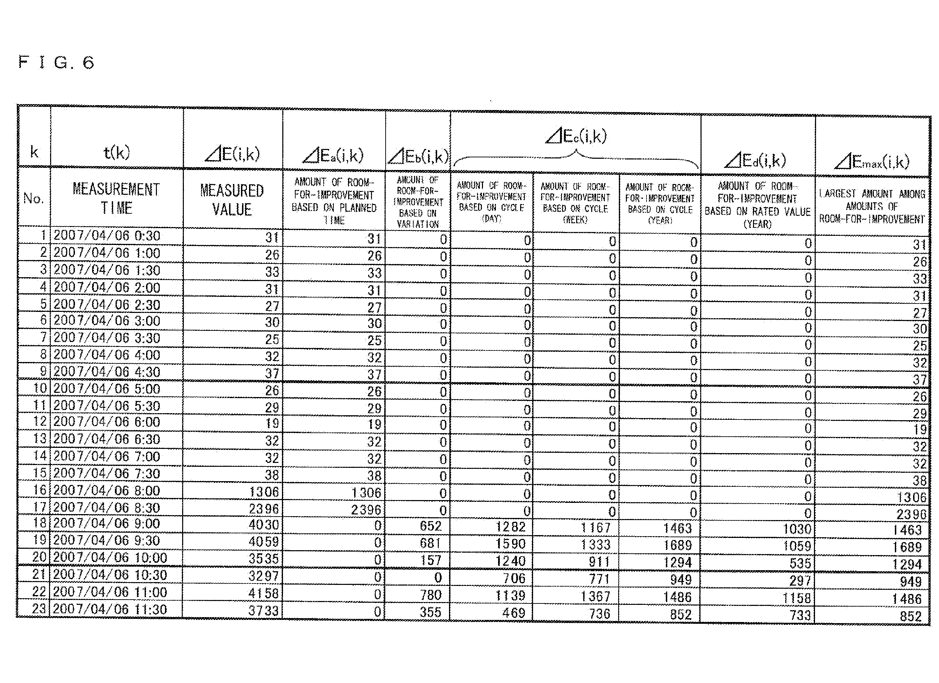

Fig. 6 is a drawing illustrating, in a table format, examples of measured data stored in a measured data storage section of the energy consumption improvement calculation apparatus and examples of amounts of room-for-improvement stored in an amount-of-room-for-improvement storage section of the energy consumption improvement calculation apparatus.
Fig. 7

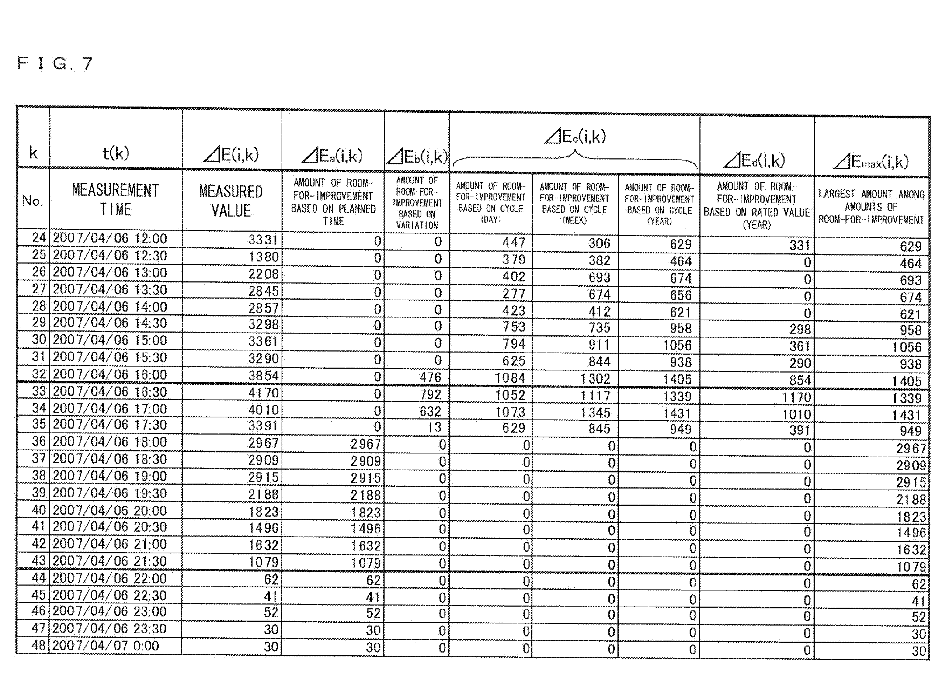

Fig. 7 is a drawing illustrating, in a table format, examples of measured data stored in the measured data storage section of the energy consumption improvement calculation apparatus and examples of amounts of room-for-improvement stored in the amount-of-room-for-improvement storage section of the energy consumption improvement calculation apparatus.

Fig. 8

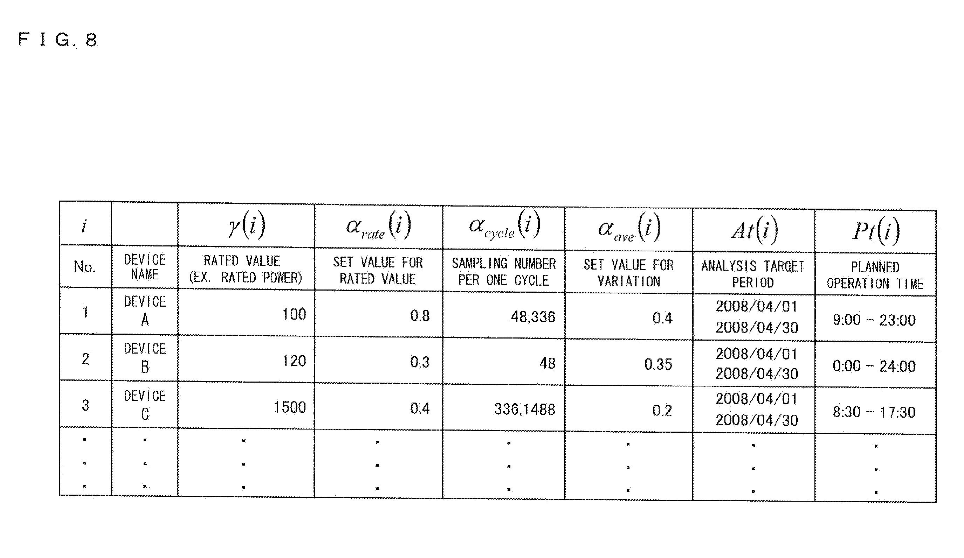

Fig. 8 is a drawing illustrating, in a table format, examples of set information of individual target devices which are stored in a set information storage section of the energy consumption improvement calculation apparatus.

Fig. 9

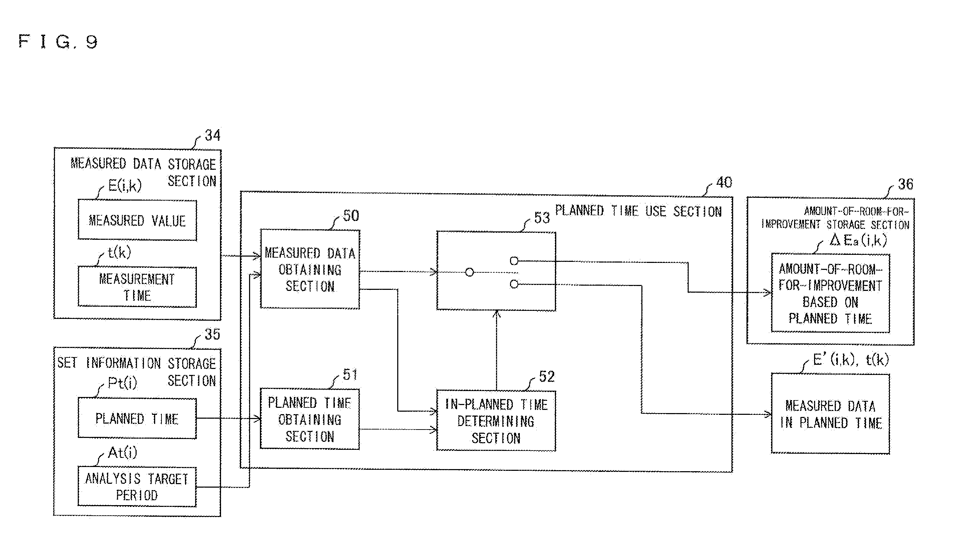

Fig. 9 is a block diagram schematically illustrating a configuration of a planned time use section of the energy consumption improvement calculation apparatus.

Fig. 10

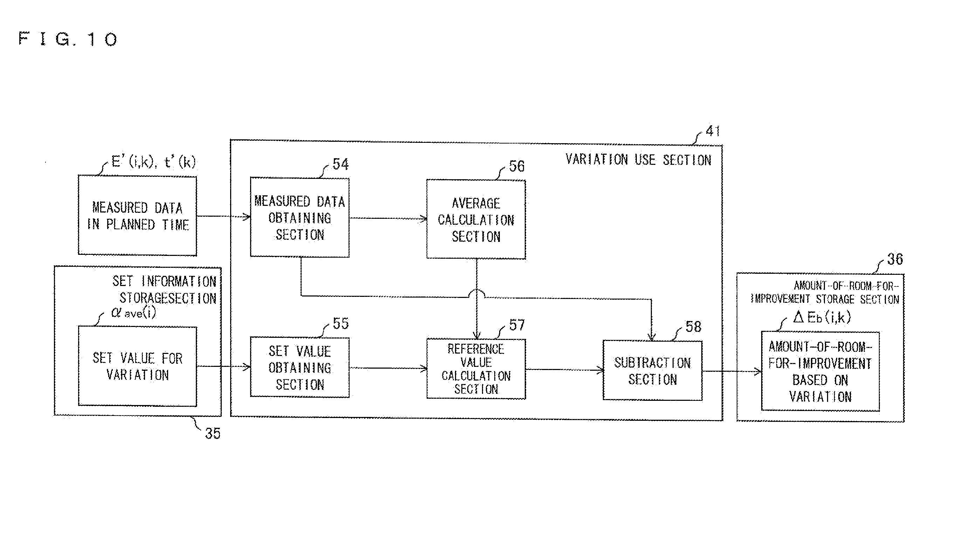

Fig. 10 is a block diagram schematically illustrating a configuration of a variation use section of the energy consumption improvement calculation apparatus.

Fig. 11

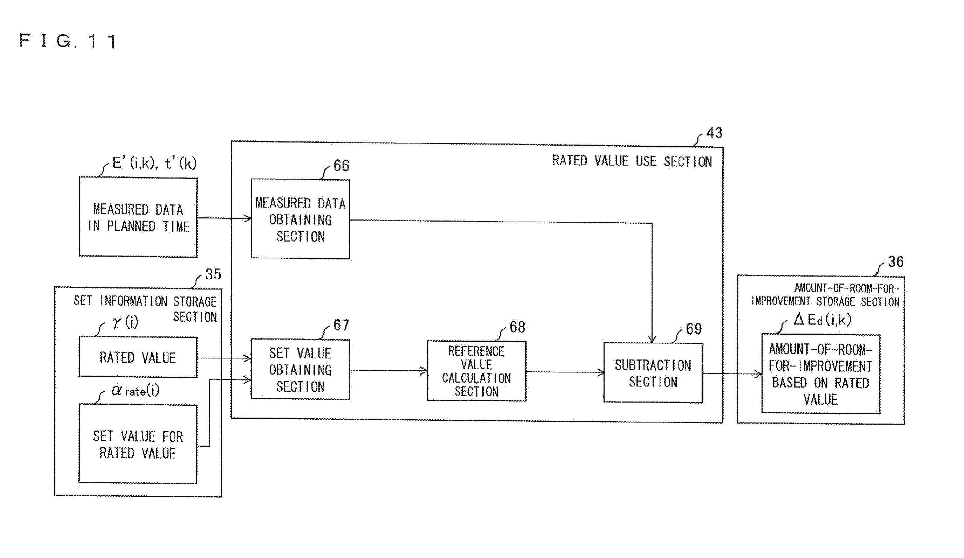

Fig. 11 is a block diagram schematically illustrating a configuration of a rated value use section of the energy consumption improvement calculation apparatus.

Fig. 12

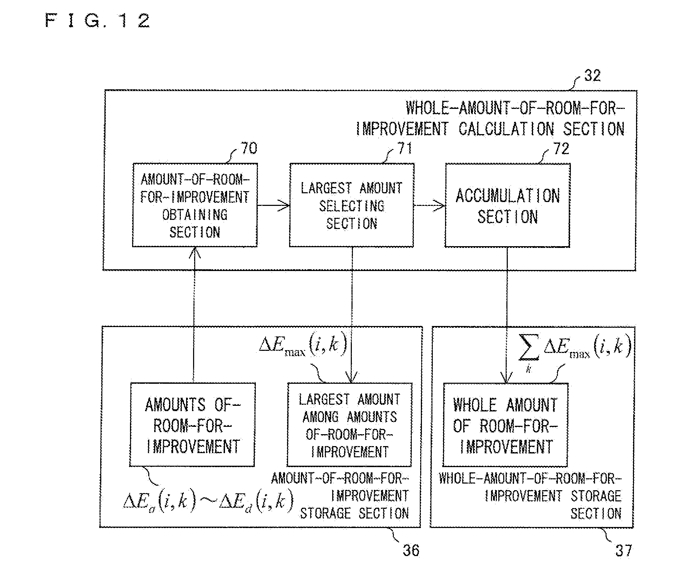

Fig. 12 is a block diagram schematically illustrating a configuration of a total-amount-of-room-for-improvement calculation section in the control section.

Fig. 13

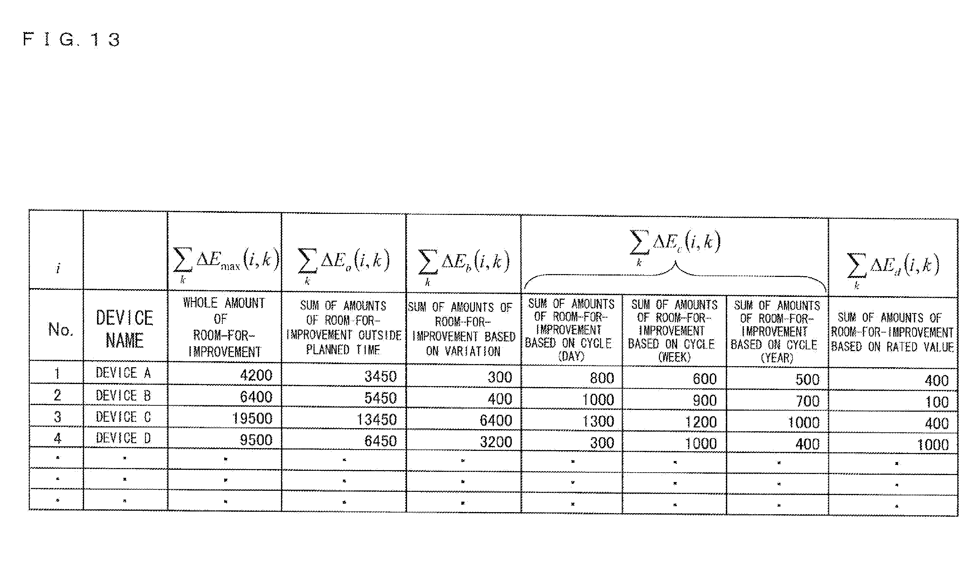

Fig. 13 is a drawing illustrating, in a table format, an example of a list generated by a list generating section in the control section.

Fig. 14

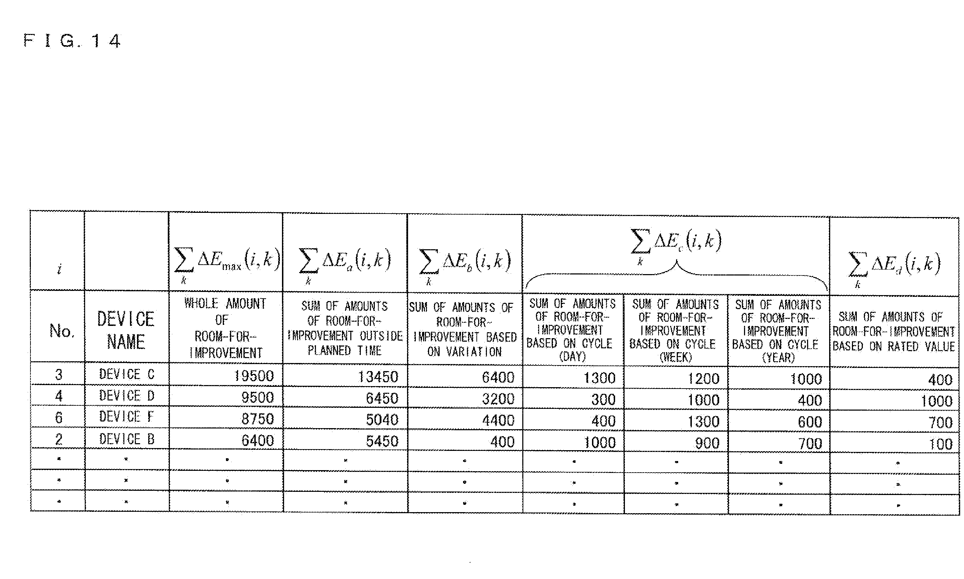

Fig. 14 is a drawing illustrating, in a table format, a list obtained by sorting devices in the above list.

Fig. 15

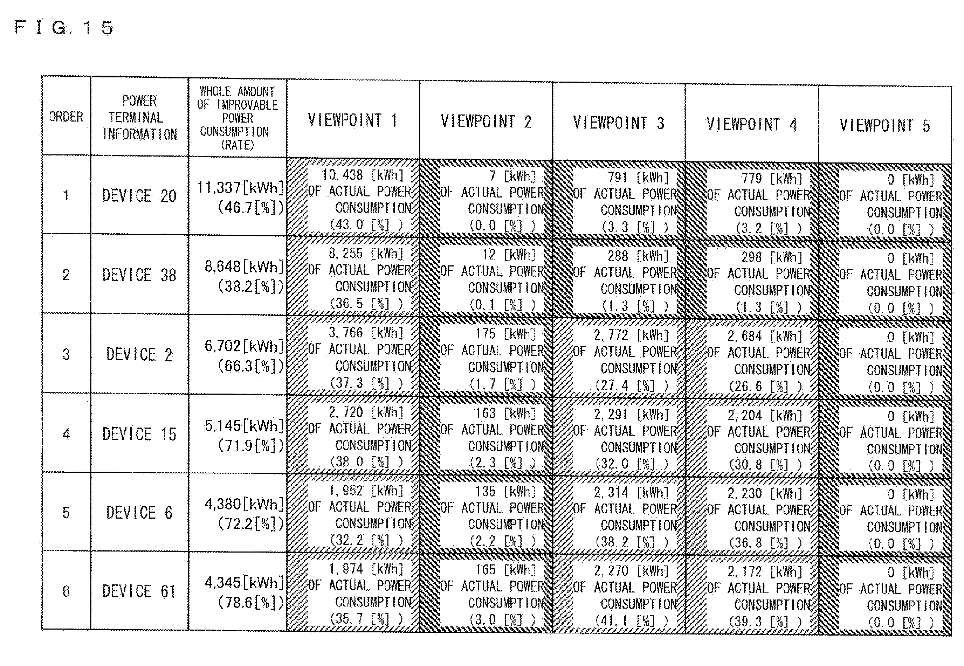

Fig. 15 is a drawing illustrating, in a table format, a concrete example of a list obtained by sorting devices in the above list.

Fig. 16

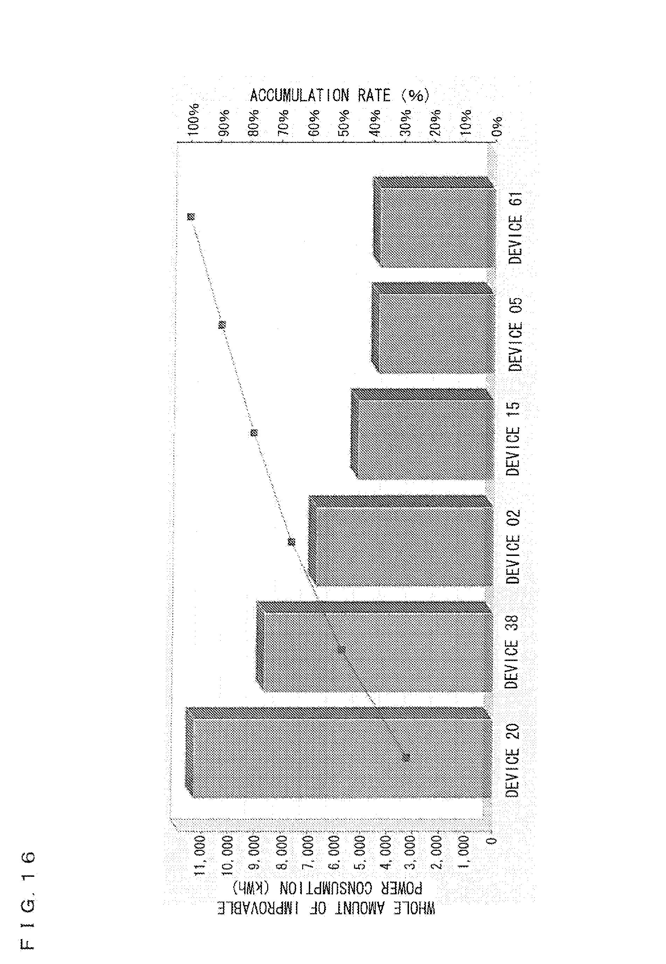

Fig. 16 is a Pareto chart generated based on the concrete example of a list obtained by sorting devices in the above list.

Fig. 17

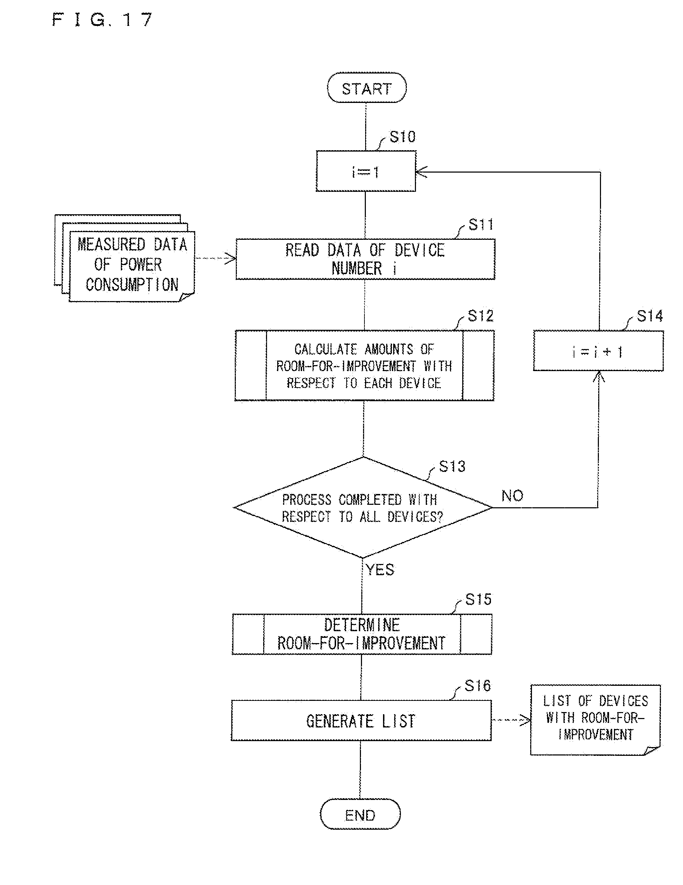

Fig. 17 is a flowchart schematically illustrating operations of the amount-of-room-for-improvement calculation section, the total-amount-of-room-for-improvement calculation section, and the list generating section in the control section.

Fig. 18

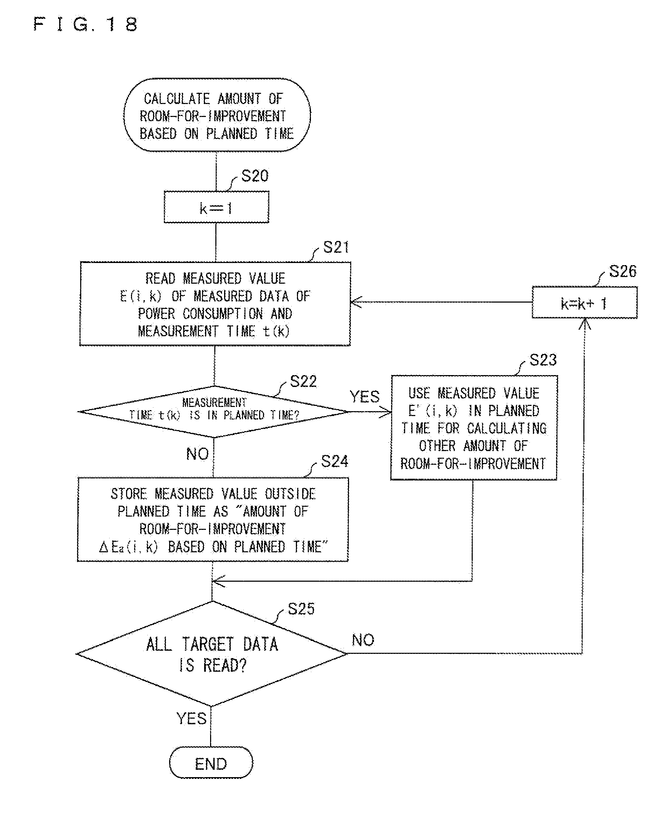

Fig. 18 is a flowchart illustrating a flow of a process of calculating an amount of room-for-improvement based on a planned time in the amount- of-room-for-improvement calculation section.

Fig. 19

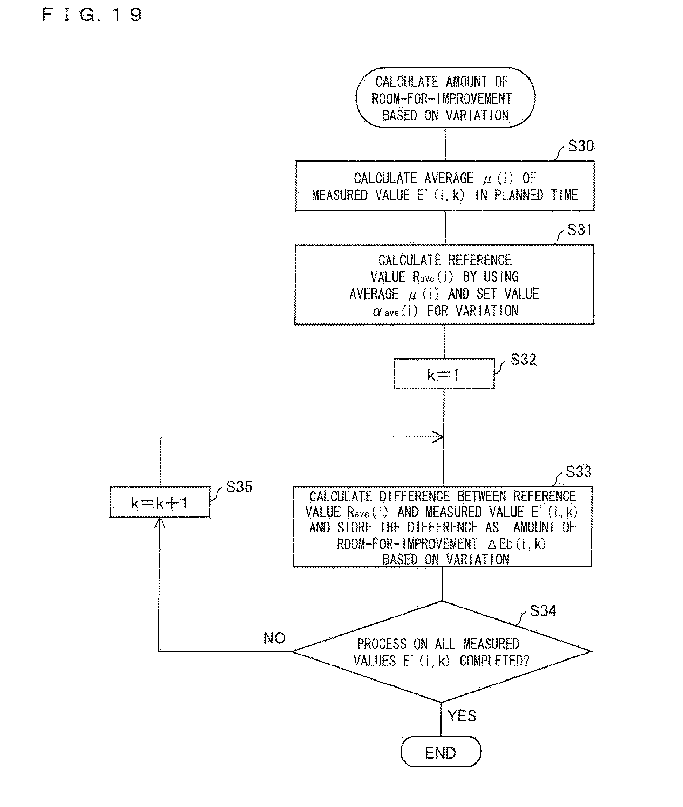

Fig. 19 is a flowchart illustrating a flow of a process of calculating an amount of room-for-improvement based on a variation in the amount-of-room-for-improvement calculation section.

Fig. 20

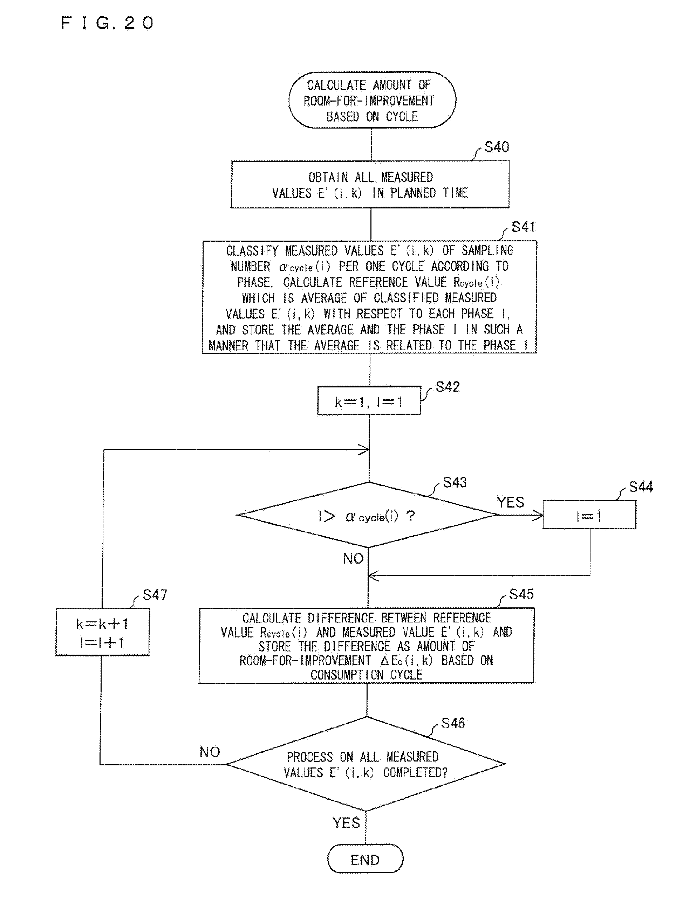

Fig. 20 is a flowchart, illustrating a flow of a process of calculating an amount of room-for-improvement based on a cycle in the amount-of-room-for-improvement calculation section.

Fig. 21

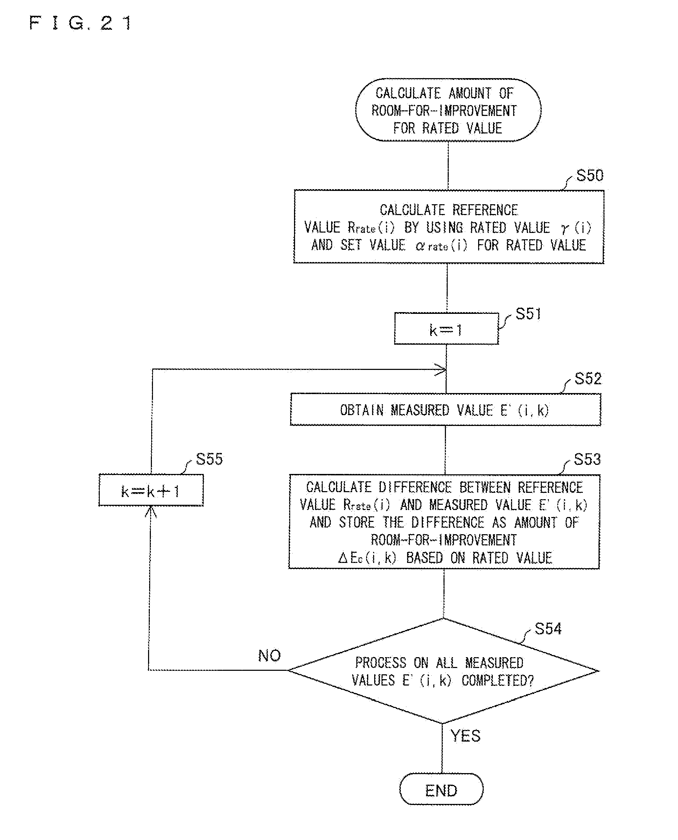

Fig. 21 is a flowchart illustrating a flow of a process of calculating an amount of room-for-improvement based on a rated value in the amount-of-room-for-improvement calculation section.

Fig. 22

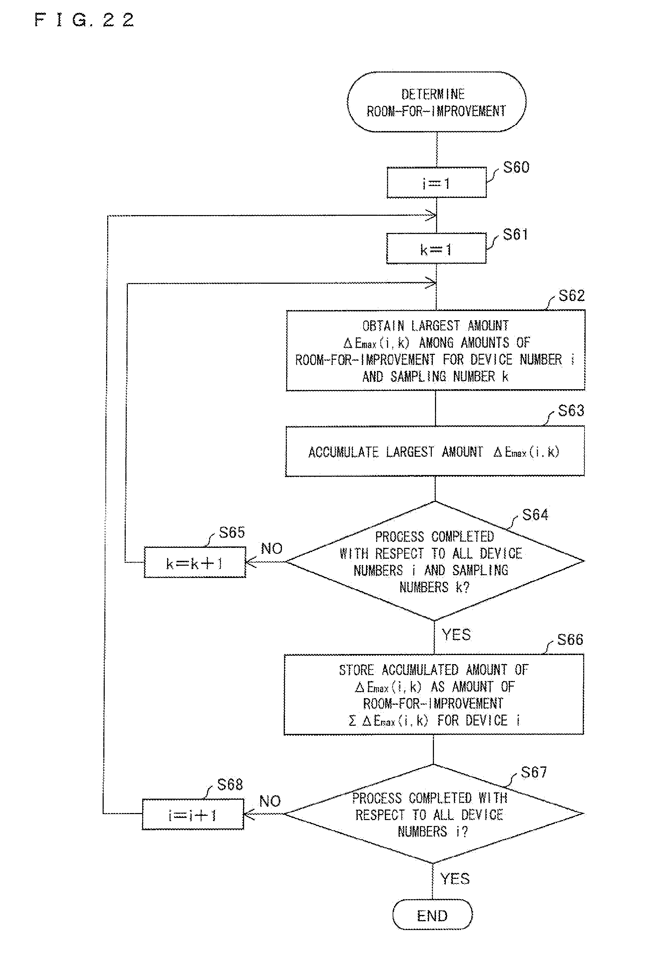

Fig. 22 is a flowchart illustrating a flow of a process of determining an amount of room-for-improvement in the total-amount-of-room-for-improvement calculation section.

Fig. 23

Fig. 23 is a graph illustrating a time period where energy is considered to have been consumed wastefully and an amount of wasteful energy consumption in a conventional system.

Description of Embodiments

The following explains an embodiment of the present invention with reference to Figs. 1-22. Fig. 2 schematically illustrates a configuration of an energy conservation assisting system in accordance with the present embodiment. An energy conservation assisting system 1 assists improvement in the amount of power consumption of a plurality of devices 11 which are targets of the assistance by the energy conservation assisting system 1. The devices 11 which are targets of the assistance are hereinafter referred to as "target devices 11". As illustrated in Fig. 2, the energy conservation assisting system 1 includes an energy consumption improvement calculation apparatus 10 and a plurality of target devices 11 which are communicably connected with the energy consumption improvement calculation apparatus 10.

The energy consumption improvement calculation apparatus 10 receives, from each of the target devices 11, measured data including a measured amount of power consumption of each of the target devices 11 and a time of measurement (sampling time), and calculates the amount of room-for-improvement of power consumption based on the received measured data. Herein, the amount of room-for-improvement of power consumption indicates an amount of power consumption which would be improvable by energy conservation measures. The energy consumption improvement calculation apparatus 10 displays the calculated amount of room-for-improvement for each target device 11. Consequently, a user can recognize which of the target devices 11 is improvable in terms of power consumption, and improve the amount of power consumption of that target device 11, thereby efficiently realizing energy conservation.

Fig. 3 schematically illustrates the energy consumption improvement calculation apparatus in accordance with the present embodiment. As illustrated in the drawing, the energy consumption improvement calculation apparatus 10 includes a control section 20, a storage section 21, an input section 22, and a display section 23.

The control section 20 totally controls operations of individual components in the energy consumption improvement calculation apparatus 10, and includes a computer including a CPU (Central Processing Unit) and a memory for example. Operations of the individual components are controlled by a computer executing a control program, The control program may be used by being read from a removable medium such as a flash memory where the program has been stored beforehand or may be used by being read from a hard disc where the program has been stored beforehand. Alternatively, the control program may be downloaded and installed to a hard disc and then executed. The control section 20 will be detailed later.

The storage section 21 is a section where information is stored. The storage section 21 includes a non-volatile memory such as a flash memory and a ROM (Read Only Memory) and a volatile memory such as a RAM (Random Access Memory). Examples of information to be stored in the non-volatile memory include the aforementioned control program, an OS (Operating System) program, other various programs, various values set for operations, and various data. Examples of information to be stored in the volatile memory include a working file and a temporal file. The storage section 21 will be detailed later.

The input section 22 is a section via which various kinds of information are inputted from outside. The input section 22 includes a reception device for receiving data from an outside device via a communication medium, an operation device via which a user inputs data, a reading device for reading data from a removable storage medium, etc.

The display section 213 displays various kinds of information. The display section 23 includes a display device such as an LCD (Liquid Crystal Display), a CRT (Cathode Ray Tube), and a plasma display.

The following details the control section 20 and the storage section 21. As illustrated in Fig. 3, the control section 20 includes an information obtaining section 30, an amount-of-room-for-improvement calculation section 31, a total-amount-of-room-for-improvement calculation section 32, and a list generating section (list generator) 33. The storage section 21 includes measured data storage sections 34, set information storage sections 35, amount-of-room-for-improvement storage sections 36, and total-amount-of-room-for-improvement storage sections 37 in such a manner that these sections are provided with respect to each target device 11.

The information obtaining section 30 obtains, via the input section 22, information from outside. The information obtaining section 30 causes the obtained information to be stored in the storage section 21. Specifically, the information obtaining section 30 obtains the measured data from the target device 11 and causes the measured data to be stored in the measured data storage section 34, and obtains, from a user etc., set information required for calculating various kinds of the amount of room-for-improvement, and causes the set information to be stored in the set information storage section 35. The measured data is time-line data.

The amount-of-room-for-improvement calculation section 31 calculates the amount of-room-for-improvement per measurement time with respect to each of a plurality of indices. The amount-of-room-for-improvement calculation section 31 causes the plural kinds of the amount-of-room-for-improvement thus calculated to be stored in the amount-of-room-for-improvement storage section 36 in such a manner that each amount of room-for-improvement is related to a corresponding measurement time.

Specifically, the amount-of-room-for-improvement calculation section 31 reads, from the set information storage section 35, set information corresponding to the index, and calculates, based on the set information thus read and the measured data read from the measured data storage section 34 if necessary, a reference value which is the amount of power consumption expected when energy conservation measures corresponding to the index would be made. Subsequently, the amount-of-room-for-improvement calculation section 31 subtracts the reference value from the measured value read from the measured data storage section 34. The subtraction result gives the amount of room-for-improvement based on the index, That is, the amount of room-for-improvement calculated based on a given index is an amount which could be reduced if energy conservation measures corresponding to the given index would be made. The amount-of-room-for-improvement calculation section 31 will be detailed later.

The total-amount-of-room-for-improvement calculation section 32 calculates the sum of plural kinds of amounts of room-for-improvement in a target period which are read from the amount-of-room-for-improvement storage section 36, and considers the sum as a total amount of room-for-improvement. Specifically, the total-amount-of-room-for-improvement calculation section 32 selects the largest amount among the plural kinds of the amounts of room-for-improvement at certain measurement time which are read from the amount-of-room-for-improvement storage section 36. Selection of the largest amount is made with respect to each of all measurement times in a target period, and the selected largest amounts are accumulated. The total-amount-of-room-for-improvement calculation section 32 causes the total amount of room-for-improvement thus calculated to be stored in the total-amount-of-room-for-improvement storage section 37.

The reason why the total-amount-of-room-for-improvement section 32 selects the largest amount among the plural kinds of the amounts of room-for-improvement is as follows. Specifically, as described above, the amount of room-for-improvement calculated based on a certain index is the amount improvable when energy conservation measures corresponding to the index would be made. Further, each amount of room-for-improvement is a difference obtained by calculating a reference value based on each index and subtracting the reference value from the measured value. That is, individual amounts of room-for-improvement are not mutually exclusive, but overlap one another. Therefore, the amount of power consumption at a certain time which is improvable if all energy conservation measures corresponding to individual indices would be made is not an accumulated amount of the individual amounts of room-for-improvement but the largest amount among the individual amounts of room-for-improvement.

The information obtaining section 30, the amount-of-room-for-improvement calculation section 31, and the total-amount-of-room-for-improvement calculation section 32 operate with respect to each target device 11. Accordingly, the amount of room-for-improvement for each target device 11 is stored in the total-amount-of-room-for-improvcment storage section 37.

The list generating section 33 generates a list indicating the total amount, of room-for-improvement with respect to each target device 11 which is read from the total-amount-of-room-for-improvement storage section 37. The list generating section 33 causes the generated list to be displayed by the display section 23. It is desirable that the list generating section 33 sorts (classifies) devices in the list in the order of largeness of the total amount of room-for-improvement, and causes the list to be displayed by the display section 23.

The following details the amount-of-room-for-improvement calculation section 31 with reference to Figs. 1 and 4-11. As described above, the amount-of-room-for-improvement calculation section 31 calculates an amount of room-for-improvement per measurement time with respect to each of a plurality of indices. Fig. 5 shows graphs indicating four indices used in the present embodiment. Each of the graphs in Fig. 5 shows a change in time of power consumption E of the target device 11.

(a) of Fig. 5 is a graph whose index is a planned operation time Pt for the target device 11. The planned operation time Pt indicates a period during which the target device 11 is planned to operate. In other words, during a period other than the planned operation time Pt, the target device 11 is not required to operate. Accordingly, as illustrated in (a) of Fig. 5, power consumption E in the period other than the planned operation time Pt is an amount of room-for-improvement.

(b) of Fig. 5 is a graph whose index is a variation from an average of the power consumption E. It is generally considered that when the variation is large, the operation of a device is unstable. Accordingly, it is considered that when the operation of the device gets stable, the variation will be small. If so, power consumption larger than the average can be made small, improving power consumption. Accordingly, as illustrated in (b) of Fig. 5, when a value obtained by adding the maximum deviation when the device operates stably to an average is regarded as a reference value in terms of variation, power consumption which exceeds the reference value is an amount of room-for-improvement.

(c) of Fig. 5 is a graph whose index is a cycle of power consumption E. For example, in a case of a device which operates similarly every day, it is often that power consumption varies periodically with a day being one cycle. Thus, it is considered that power consumption of a device operating stably varies periodically. In other words, it is considered that in a case of a device operating unstably, power consumption deviates from a cyclic fluctuation, which enlarges power consumption compared with the case of a device operating stably.

Therefore, an average of a plurality of measured values at the same phase in a certain cycle is calculated, such average is calculated with respect to each of all phases in the cycle, and the averages calculated with respect to individual phases in the cycle are regarded as reference values for the cycle. Power consumption beyond the reference values is regarded as the amount of room-for-improvement as illustrated in (c) of Fig. 5. Instead of the average as above, a representing value such as a central value may be used.

(d) of Fig. 5 is a graph whose index is a rated value such as a rated power of the target device 11. In general, a device operates with power consumption equal to or smaller than a predetermined percentage (e.g. 90%) of the rated value. That is, if a device operates with power consumption larger than the predetermined percentage of the rated value, the device is under an unplanned condition, which requires improvement in terms of power consumption. Accordingly, as illustrated in (d) of Fig. 5, when a value obtained by multiplying a rated value of power consumption by a set percentage is regarded as a reference value for the rated value, power consumption which exceeds the reference value is an amount of room-for-improvement.

Fig. 4 schematically illustrates a configuration of the amount-of-room-for,-improvement calculation section 31. As illustrated in the drawing, the amount-of-room-for-improvement calculation section 31 includes a planned time use section (other index user) 40, a variation use section (other index user) 41, a cycle use section 42, and a rated value use section (other index user) 43, Further, in the measured data storage section 34, a measured value E(i,k) is stored as data of measured power consumption with respect to each target device 11, and a measurement time t(k) is stored. Further, in the set information storage section 35, set information required for calculating an amount of room-for-improvement, such information as the planned operation time Pt, is stored as set information for each target device 11.

The natural number i is a number serially assigned to the target devices 11 (hereinafter referred to as "device number"). The natural number k is a number indicative of the order of sampling (hereinafter referred to as "sampling number"). Accordingly, the measured value and the measurement time are related to each other via the sampling number.

The planned time use section 40 calculates an amount of room-for-improvement $\Delta Ea(i,k)$ by using the planned time Pt as an index. The planned time use section 40 causes the calculated amount of room-for-improvement $\Delta Ea(i,k)$ to be stored in the amount-of-room-for-improvement storage section 36. Further, the planned time use section 40 extracts, from the measured data (E(i,k), t(k)), measured data (E'(i,k), t'(k)) in the planned time Pt. The measured data (E'(i,k), t'(k)) in the planned time Pt thus extracted is used in the variation use section 41, the cycle use section 42, and the rated value use section 43. Therefore, it is desirable that the measured data (E'(i,k), t'(k)) in the planned time Pt is temporarily stored in a volatile storage device.

The variation use section 41 calculates an amount of room-for-improvement $\Delta Eb(i,k)$ by using a variation from an average of power consumption E as an index. The variation use section 41 causes the calculated amount of room-for-improvement $\Delta Eb(i,k)$ to be stored in the amount-of-room-for-improvement storage section 36.

The cycle use section 42 calculates an amount-of-room-for-improvement $\Delta Ec(i,k)$ by using a cycle of power consumption E as an index. The cycle use section 42 causes the calculated amount of room-for-improvement $\Delta Ec(i,k)$ to be stored in the amount-of-room-for-improvement storage section 36.

The rated value use section 43 calculates an amount of room-for-improvement $\Delta Ed(i,k)$ by using a rated value of the target device 11 as an index. The rated value use section 43 causes the calculated amount of room-for-improvement $\Delta Ed(i,k)$ to be stored in the amount-of-room-for-improvement storage section 36. The planned time use section 40, the variation use section 41, the cycle use section 42, and the rated value use section 43 will be detailed later.

Figs. 6 and 7 are tables showing examples of the measured data (E(i,k), t(k)) stored in the measured data storage section 34 and examples of amounts of room-for-improvement $\Delta Ea(i,k)$-$\Delta Ed(i,k)$ stored in the amount-of-room-for-improvement storage section 36. Numbers in the columns in the drawings indicate, from left to right, a sampling number k, a measurement time t(k), a measured value E(i,k), an amount of room-for-improvement $\Delta Ea(i,k)$ based on a planned time, an amount of room-for-improvement $\Delta Eb(i,k)$ based on a variation, an amount of room-for-improvement $\Delta Ec(i,k)$ based on a cycle, an amount of room-for-improvement $\Delta Ed(i,k)$ based on a rated value, and the largest amount $\Delta Emax(i,k)$ among the amounts of room-for-improvement. In the examples shown in the drawings, measured data (E(i,k), t(k)) measured per 30 min from half past midnight of April 6, 2007, to midnight of April 7 and the amounts of room-for-improvement $\Delta Ea(i,k)$- $\Delta Ed(i,k)$ and $\Delta Emax(i,k)$ calculated from individual measured data are described.

As for the amount of room-for-improvement $\Delta Ec(i,k)$ based on a cycle, plural kinds of the cycle are described: a day, a week, and a month. In this manner, in a case where plural cycles exist for power consumption E, the amount of room-for-improvement $\Delta Ec(i,k)$ may be calculated with respect to each of the plural cycles.

Fig. 8 is a table showing an example of set information of the target devices 11 stored in the set information storage section 35. In the example shown in the drawing, from left to right, a device number i, a device name, a rated value $\gamma(i)$ (e.g. rated power), a set value $\alpha$rate (i) for the rated value, a sampling number $\alpha$cycle (i) per one cycle, a set value $\alpha$ave(i) for a variation, an analysis target period At(i), and a planned operation time Pt(i) are described with respect to each target device 11.

The analysis target period At(i) is a period during which the energy consumption improvement calculation apparatus 10 carries out analysis. That is, the measured value E(i,k) at the measurement time t(k) in the analysis target period At(i) is analyzed by the energy consumption improvement calculation apparatus 10. In the examples in Figs. 6 and 7, sampling of measured data is made every 30 minutes.

Accordingly, when one cycle is a day, the sampling number $\alpha$cycle (i) is 48. When one cycle is a week, the sampling number a cycle (i) is 336. When one cycle is a month (31 days), the sampling number $\alpha$cycle (i) is 1,488.

The following details the planned time use section 40, the variation use section 41, the cycle use section 42, and the rated value use section 43 with reference to Figs. 1 and 9-11.

Fig. 9 schematically illustrates a configuration of the planned time use section 40. As illustrated in the drawing, the planned time use section 40 includes a measured data obtaining section 50, a planned time obtaining section 51, an in-planned time determining section 52, and a selection section 53.

The measured data obtaining section 50 obtains the analysis target period At(i) from the set information storage section 35, and obtains the measured data (E(i,k), t(k)) including the measurement time t(k) in the obtained analysis target period At(k) from the measured data storage section 34. The measured data obtaining section 50 transmits the obtained measured data (E(i,k), t(k)) to the selection section 53, and transmits the measurement time t(k) in the measured data to the in-planned time determining section 52.

The planned time obtaining section 51 obtains the planned (operation) time Pt(i) from the set information storage section 35. The planned time obtaining section 51 transmits the obtained planned time Pt(i) to the in-planned time determining section 52.

The in-planned time determining section 52 determines whether the measurement time t(k) transmitted from the measured data obtaining section 50 is in the planned time Pt(i) transmitted from the planned time obtaining section 51. The in-planned time determining section 52 transmits the result of the determination to the selection section 53.

The selection section 53 selects a destination to which the measured data E((i,k), t(k)) is to be transmitted, according to the result of the determination by the in-planned time determining section 52. Specifically, in a case where the measurement time t(k) is in the planned time Pt(i), the selection section 53 transmits, to the variation use section 41, the cycle use section 42, and the rated value use section 43, in-planned-time measured data (E'(i,k), t'(k)) which is the measured data (E(i,k), t(k)) transmitted from the measured data obtaining section 50. On the other hand, when the measurement time t(k) is not in the planned time Pt(i), the selection section 53 causes the measured value E(i,k) transmitted from the measured data obtaining section 50 to be stored as the amount of room-for-improvement $\Delta$Ea(i,k) based on a planned time in the amount-of-room-for-improvement storage section 36,

Fig. 10 schematically illustrates a configuration of the variation use section 41. As illustrated in the drawing, the variation use section 41 includes a measured data obtaining section 54, a set value obtaining section 55, an average value calculation section 56, a reference value calculation section 57, and a subtraction section 58.

The measured data obtaining section 54 obtains all of the in-planned-time measured data {E'(i,k), t'{k)) transmitted from the planned time use section 40. The measured data obtaining section 54 transmits, at a time, all of measured values E'(i,k) thus obtained to the average calculation section 56, and transmits, at a time or sequentially, all of the measured values E'(i,k) thus obtained to the subtraction section 58.

The set value obtaining section 55 obtains the set value aave(i) for a variation from the set information storage section 35. The set value obtaining section 55 transmits the obtained set value aave(i) to the reference value calculation section 57.

The average calculation section 56 calculates an average $\mu$(i) of all the measured values E'(i,k) transmitted from the measured data obtaining section 54. The average calculation section 56 transmits the calculated average $\mu$(i) to the reference value calculation section 57.

Using the average $\mu$(i) transmitted from the average calculation section 56 and the set value aave(i) transmitted from the set value obtaining section 55, the reference value calculation section 57 calculates a reference value Rave(i) for a variation, in accordance with an equation below. The reference value calculation section 57 transmits the calculated reference value Rave(i) to the subtraction section 58.

$$\mathrm{Rave(i)} = (1 + \mathrm{aave(i)}) \times \mu(i) \qquad ...(1)$$

The subtraction section 58 subtracts, from the measured value E'(i,k) transmitted from the measured data obtaining section 54, the reference value Rave(i) transmitted from the reference value calculation section 57. The subtraction section 58 causes the result, of the calculation. (E'(i,k) - Rave(i)) to be stored as the amount of room-for-improvement $\Delta$Eb(i,k,) based on a variation in the amount-of-room-for-improvement storage section 36.

Fig. 1 schematically illustrates a configuration of the cycle use section 42. As illustrated in the drawing, the cycle use section 42 includes a measured data obtaining section 60, a set value obtaining section 61, a phase determination section (phase obtainer) 62, a table generating section (reference value obtainer) 63, and a subtraction section (amount-of-room-for-improvement calculator) 64. The cycle use section 42 has two modes: a table generating mode in which a correspondence table 65 indicative of correspondence between a phase and a reference value is generated and stored in the storage section 21, and an amount-of-room-for-improvement calculating mode in which an amount of room-for-improvement $\Delta$Ec(i,k) is calculated based on the correspondence table 65. The cycle use section 42 is in the table generating mode when obtaining the in-planned-time measured data (E'(i,k), t'(k)), and transfers to the amount-of-room-for-improvement calculating mode after generating the correspondence table 65.

The measured data obtaining section 60 obtains all of the in-planned-time measured data (E'(i,k), t'(k)) from the planned time use section 40. At the time, the cycle use section 42 transfers to the table generating mode.

When the cycle use section 42 is in the table generating mode, the measured data obtaining section 60 transmits the obtained measured value E'(i,k) to the table generating section 63, and transmits a sampling number k corresponding to the obtained measured value E'(i,k) to the phase determination section 62. On the other hand, when the cycle use section 42 is in the amount-of-room-for-improvement calculating mode, the measured data obtaining section 60 transmits the obtainer measured value E'(i,k) to the subtraction section 64 and transmits a sampling number k corresponding to the obtained measured value E'(i,k) to the phase determination section 62.

The set value obtaining section 61 obtains, from the set information storage section 35, a sampling number cicycle(i) per one cycle as a set value. The set value obtaining section 55 transmits the obtained set value acycle(i) to the phase determination section 62.

Using the set value acycle(i) transmitted from the set information storage section 35, the phase determination section 62 determines a phase number 1 corresponding to the sampling number k transmitted from the measured data obtaining section 60, in accordance with an equation below. All of character variables in the equation are natural numbers.

$$k = 1 + (m - 1) \times acycle(i) \quad ...(2)$$

That is, the phase number 1 is a remainder of division of the sampling number k by the sampling number acycle (i) per one cycle, and meets a relation $1 \leq 1 \leq$ acycle(i). In the case of the table generating mode, the phase determination section 62 transmits the phase number 1 thus determined to the table generating section 63. In the case of the amount-of-room-for-improvement calculating mode, the phase determination section 62 transmits the phase number 1 thus determined to the subtraction section 64.

The table generating section 63 operates in the case of the table generating mode, and generates the correspondence table 65. The table generating section 63 causes the generated correspondence table 65 to be stored in the storage section 21. Thereafter, the cycle use section 42 transfers to the amount-of-room-for-improvement calculating mode.

Specifically, the table generating section 63 receives all of the measured values E'(i,k) from the measured data obtaining section 60 and receives phase numbers I respectively corresponding to the measured values E'(i,k) from the phase determination section 62. Subsequently, the table generating section 63 calculates a reference value Rcycle(i,1) which is an average of plural ones of the measured values E'(i,k) which ones correspond to a certain phase number 1, and repeats this calculation for the rest of the phase numbers 1 ($1 \leq 1 \leq$ acycle(i)). Thus, the reference values Recycle (i,1) corresponding to individual phase numbers 1 are determined. Then, the table generating section 63 causes the correspondence table 65 indicative of correspondences between the phase numbers 1 and the reference values Rcycle (i,1) to be stored in the storage section 21.

The subtraction section 64 operates in the case of the amount-of-room-for-improvement calculating mode, and obtains, from the correspondence table 65, the reference value Rcycle (i,1) corresponding to the phase number 1 transmitted from the phase determination section 62, and subtracts the obtained reference value Rcycle (i,1) from the measured value E'(i,k) transmitted from the measured data obtaining section 60. The subtraction section 64 causes the result of the calculation (E'(i,k) - Rcycle (i)) to be stored as an amount of room-for-improvement $\Delta Ec(i,k)$ based on a cycle in the amount-of-room-for-improvement storage section 36.

As shown in Fig. 8, there is a case where a plurality of sampling numbers acycle(i) per one cycle are set. In this case, the set value obtaining section 61, the phase determination section 62, the table generating section 63, and the subtraction section 64 operate with respect to each set value acycle(i), the correspondence table 65 is generated with respect to each set value acycle(i), and the amount of room-for-improvement $\Delta Ec(i,k)$ is stored in the amount-of-room-for-improvement storage section 36 with respect to each set value acycle(i).

Fig. 11 schematically illustrates a configuration of the rated value use section 43. As illustrated in the drawing, the rated value section 43 includes a measured data obtaining section 66, a set value obtaining section 67, a reference value calculation section 68, and a subtraction section 69.

The measured data obtaining section 66 obtains in-planned-time measured data (E'(i,k), t'(k)) transmitted from the planned time use section 40. The measured data obtaining section 54 transmits the obtained measured value E'(i, k) to the subtraction section 69.

The set value obtaining section 67 obtains, from the set information storage section 35, a rated value $\gamma(i)$ and a set value arate(i) for the rated value. The set value obtaining section 67 transmits the rated value $\gamma(i)$ and the set value $\alpha$rate (i) thus obtained to the reference value calculation section 68,

Using the rated value $\gamma(i)$ and the set value $\alpha$rate(i) transmitted from the set value obtaining section 67, the reference value calculation section 68 calculates a reference value Rrate(i) for a rated value, in accordance with an equation below, The reference value calculation section 68 transmits the calculated reference value Rrate(i) to the subtraction section 69.

$$Rrate(i) = \gamma(i) \times \alpha rate(i) \qquad ...(3)$$

The subtraction section 69 subtracts, from the measured value E'(i,k) transmitted from the measured data obtaining section 66, the reference value Rrate(i) transmitted from the reference value calculation section 68. The subtraction section 69 causes the result of the calculation (E'(i,k) - Rrate(i)) to be stored as an amount of room-for-improvement $\Delta Ed(i,k)$ based on variation in the amount-of-room-for-improvement storage section 36.

The following details the total-amount-of-room-for-improvement calculation section 32 and the list generating section 33 with reference to Figs. 12-16. Fig. 12 schematically illustrates a configuration of the total-amount-of-room-for- improvement calculation section 32. As illustrated in the drawing, the total-amount-of-room-for-improvement calculation section 32 includes an amount-of-room-for-improvement obtaining section 70, a largest amount selecting section (selector) 71, and an accumulation section (total-amount-of-room-for-improvement calculator) 72.

The amount-of-room-for-improvement obtaining section 70 obtains, from the amount-of-room-for-improvement storage section 36, the amounts of room-for-improvement $\Delta Ea(i,k)$- $\Delta Ed(i,k)$ with respect to each sampling number k. The amount-of-room-for-improvement obtaining section 70 transmits, to the largest amount selecting section 71, the obtained amounts of room-for-improvement $\Delta Ea(i,k)$ - $\Delta Ed(i,k)$ with respect to each sampling number k.

The largest amount selecting section 71 selects the largest amount $\Delta Emax(i,k)$ among the amounts of room-for-improvement $\Delta Ea(i,k)$- $\Delta Ed(i,k)$ transmitted from the amount-of-room-for-improvement obtaining section 70 with respect to each sampling number k. The largest amount selecting section 71 transmits the selected largest amount $\Delta Emax(i,k)$ to the accumulation section 72 with respect to each sampling number k.

In the examples shown in Figs. 6 and 7, the largest amount selecting section 71 causes the selected largest amount $\Delta Emax(i,k)$ to be stored in the amount-of-room-for-improvement storage section 36 with respect to each sampling number k. In the examples shown in Figs. 13 and 14 mentioned later, the largest amount selecting section 71 transmits the amounts of room-for-improvement $\Delta Ea(i,k)$-$\Delta Ed(i,k)$ to the accumulation section 72 with respect to each sampling number k.

The accumulation section 72 accumulates the largest amount $\Delta Emax(i,k)$ transmitted from the largest amount selecting section 71 with respect to each sampling number k. The accumulation section 72 causes an accumulated amount $\Sigma\Delta Amax(i,k)$ to be stored as a total amount of room-for-improvement in the total-amount-of-room-for-improvement storage section 37. In later-mentioned examples shown in Figs. 13 and 14, the accumulation section 72 accumulates each kind of the amounts of room-for-improvement $\Delta Ea(i,k)$-$\Delta Ed(i,k)$ which have been transmitted from the largest amount selecting section 71 with respect to each sampling number k, and then the accumulation section 72 causes accumulated amounts $\Sigma\Delta Ea(i,k)$- $\Sigma\Delta Ed(i,k)$ to be stored in the total-amount-of-room-for-improvement storage section 37.

As described above, the list generating section 33 generates a list of total amounts of room-for-improvement $\Sigma\Delta AEmax(i,k)$ for individual target devices 11 which are read from the total-amount-of-room-for-improvement storage section 37. Fig. 13 is a table showing an example of a list generated by the list generating section 33. In the example shown in the drawing, from left to right, a device number i, a device name, and a total amount of room-for-improvement $\Sigma\Delta Emax(i,k)$ are described with respect to each target device 11. Further, in the list, accumulated amounts of room-for-improvement $\Sigma\Delta Ea(í, k)$- $\Sigma\Delta Ed(i,k)$ which are read from the total-amount-of-room-for-improvement storage section 37 are described with respect to each target device 11. When the list shown in Fig. 13 is displayed by the display section 23, a user who sees the displayed list can recognize the amount of improvable energy consumption of each target device 11.

Further, the list generating section 33 sorts the devices in the list in the order of largeness of the total amount of room-for-improvement $\Sigma\Delta Emax(i,k)$. Fig. 14 shows a list obtained by sorting the devices in the list of Fig. 13. When the list shown in Fig. 14 is displayed by the display section 23, a user who sees the displayed list can quickly recognize which target device 11 is likely to improve energy consumption efficiently.

Fig. 15 shows a concrete example of a list indicative of sorted devices, which is generated by the list generating section 33 and displayed by the display section 23. The list in the drawing is shown in a table format as with the lists shown in Figs. 13 and 14. The list of Fig. 15 is different from the list of Fig. 14 in that total amounts of room-for-improvement, the sums of amounts of room-for-improvement, and percentages of the total amounts of room-for-improvement or the sums of amounts of room-for-improvement to actual power consumption are added. Further, the list of Fig. 15 is different from the list of Fig. 14 in that wordings such as "viewpoint 1" and "viewpoint 2" are assigned to columns of the sums of amounts of room-for-improvement. A user who sees the list of Fig. 15 can quickly recognize that the "device 20" is likely to improve power consumption most efficiently.

Further, in the list of Fig. 15, the total amounts of room-for-improvement in terms of individual viewpoints are differently hatched according to whether percentages of the total amounts of room-for-improvement are less than 20% or not less than 20%. This enables a user to comprehend a viewpoint with a large amount of room-for-improvement with respect to each target device 11. By carrying out energy conservation based on the viewpoint, it is possible to further efficiently improve power consumption..

The list generating section 33 may be arranged to generate a Pareto chart based on the list and cause the generated Pareto chart to be displayed by the display section 23. In this case, a user can quickly comprehend a target device 11 whose power consumption can be improved efficiently.

Fig. 16 is an example of a Pareto chart which is generated by the list generating section 33 based on the list of Fig. 15 and is displayed by the display section 23. In the Pareto chart in the drawing, a total amount of room-for-improvement, i.e. the total amount of improvable power consumption is represented by a bar graph, and a rate of accumulation is represented by a line graph. A user who sees the Pareto chart of Fig. 16 can understand that improving power consumption of "device 20", "device 38", and "device 02" whose total amounts of room-for-improvement occupy most (70%) of the sum of total amounts of room-for-improvement for all the target devices 11 could efficiently improve power consumption of a system as a whole including all the target devices 11.

The following explains the operation of the control section 20 of the energy consumption improvement calculation apparatus 10 with reference to Figs. 17-22. Fig. 17 schematically illustrates the operations of the amount-of-room-for-improvement calculation section 31, the total-amount-of-room-for-improvement calculation section 32, and the list generating section 33 in the control section 20.

As shown in Fig. 17, initially, the device number i is initialized to 1 (step S10. this may be hereinafter referred to as "S10". Subsequent steps may be referred to similarly). Next, the amount-of-room-for-improvement calculation section 31 reads measured data (E(i,k), t(k)) of the target device 11 with the device number i from the measured data storage section 34, and reads set information of the target device 11 with the device number i from the set information storage section 35 (S11).

Subsequently, using the measured data (E(i,k), t(k)) and the set information thus read of the target device 11 with the device number i, the amount-of-room-for-improvement calculation section 31 calculates plural kinds of amounts of room-for-improvement of power consumption (S12). The amount-of-room-for-improvement calculation section 31 causes the calculated amounts of room-for-improvement to be stored in the amount-of-room-for-improvement storage section 36. The step S12 will be detailed later. Then, the amount-of-room-for-improvement calculation section 31 increments the device number i by 1 (S14), goes back to the step S11 and repeats the above process, until carrying out the above process on all of the target devices 11 (S13).

When the above process has been carried out on all the target devices 11 (S13), the total-amount-of-room-for-improvement calculation section 32 determines amounts of room-for-improvement of all the target devices 11 (S15), and the list generating section 33 generates a list of the target devices 11 with amounts of room-for-improvement and causes the list to be displayed by the display section 23 (S16). Thereafter, the operation is finished. The step S15 will be detailed later.

The following details the step S12 with reference to Figs. 18-21, If the present embodiment, the process of calculating amounts of room-for-improvement (S12) includes processes of calculating an amount of room-for-improvement $\Delta Ea(i,k)$ based on a planned time, an amount of room-for-improvement $\Delta Eb(i,k)$ based on a variation, an amount of room-for-improvement $\Delta Ec(i,k)$ based on a cycle, and an amount of room-for-improvement $\Delta Ed(i,k)$ based on a rated value, respectively.

Fig. 18 shows a flow of the process of calculating the amount of room-for-improvement $\Delta Ea(i,k)$ based, on a planned time. This process is carried out by the planned time use section 40 of the amount-of-room-for-improvement calculation section 31. As illustrated in the drawing, initially, the planned time use section 40 initializes the sampling number k to 1 (S20). Next, the planned time use section 40 reads measured data (E(i,k), t(k)) of the sampling number k from the measured data storage section 34 and reads a planned time Pt(i) and an analysis target period At(i) of the target device 11 with the device number i from the set information storage section 35 (S21).

Subsequently, the planned time use section 40 determines whether a measurement time t(k) of the measured data (E(i,k), t(k)) is in the planned time Pt(i) or not (S22).

In a case where the measurement time t(k) is in the planned time Pt(i), the planned time use section 40 transmits a measured value E(i,k) of the measured data (E(i,k), t(k)) as an in-planned-time measured value E'(i,k) to function blocks 41-43 where processes of calculating other amounts of room-for-improvement are carried out. Thus, the in-planned-time measured value E'(i,k) is used in the processes of calculating other amounts of room-for-improvement (S23), On the other hand, in a case where the measurement time t(k) is not in the planned time Pt(i), the selection section 53 causes the measured value E(i,k) to be stored as the amount of room-for-improvement $\Delta Ea(i,k)$ based on a planned time in the amount-of-room-for-improvement storage section 36 (S24).

Then, the planned time use section 40 increments the sampling number k by 1 (S26), goes back to the step S21 and repeats the above process, until carrying out the above process with respect to all the sampling numbers k included in the analysis target period At(i) (S25). When the process has been carried out with respect to all the sampling numbers k included in the analysis target period At(i) (S25), the planned time use section 40 finishes the operation.

Fig. 19 shows a flow of the process of calculating the amount of room-for-improvement $\Delta Eb(i,k)$ based on a variation. This process is carried out by the variation use section 41 of the amount-of-room-for-improvement calculation section 31. As illustrated in the drawing, initially, the variation use section 41 obtains all the in-planned time measured values E'(i,k) transmitted from the planned time use section 40, and calculates an average $\mu$(i) of the in-planned time measured values E'(i,k) (S30). Next, using the average $\mu$(i) thus calculated and a set value $\alpha$ave(i) for a variation which is read from the set information storage section 35, the variation use section 41 calculates a reference value Rave(i) based on a variation in accordance with the aforementioned equation (1) (S31).

Subsequently, the variation use section 41 initializes the sampling number k to 1 (S32). Next, the variation use section 41 calculates a difference between the in-planned-time measured value E'(i,k) and the reference value Rave(i), and causes the calculated difference to be stored as the amount of room-for-improvement $\Delta$Eb(i,k) based on a variation in the amount-of-room-for-improvement storage section 36 (S33). Then, the variation use section 41 increments the sampling number k by 1 (S35), goes back to the step S33 and repeats the above process, until carrying out the above process on all the in-planned-time measured values E'(i,k) transmitted from the planned time use section 40 (S34). When the above process has been carried out on all the in-planned-time measured values E'(i,k) (S34), the variation use section 41 finishes the operation.

Fig. 20 shows a flow of the process of calculating the amount of room-for-improvement $\Delta$Ec(i,k) based on a cycle. This process is carried out by the cycle use section 42 of the amount-of-room-for-improvement calculation section 31. As illustrated in the drawing, initially, the cycle use section 42 obtains all the in-planned time measured values E'(i, k) transmitted from the planned time use section 40 (S40).

Subsequently, using a sampling number $\alpha$cycle(i) per one cycle which is read from the set information storage section 35, the cycle use section 42 classifies all the in-planned-time measured values E'(i,k) into groups with respect to each phase 1 (S41). Next, the cycle use section 42 calculates a reference value Rcycle(i) which is an average of a group of the measured values E'(i,k) classified with respect to each phase 1, and the cycle use section 42 causes the calculated reference value Rcycle(i) to be stored in the storage section 21 in such a manner that the reference value Rcycle(i) is related to the phase 1 (S41).

Subsequently, the cycle use section 42 initializes the sampling number k and the phase 1 to 1 (S42). Next, the cycle use section 42 determines whether the phase I is larger than the sampling number $\alpha$cycle (i) per one cycle or not (S43), and if the phase 1 is larger than the sampling number $\alpha$cycle (i) per one cycle, the cycle use section 42 restores the phase 1 to 1 (S44).

Subsequently, the cycle use section 42 calculates a difference between the in-planned-time measured value E'(i,k) and the reference value Rcycle(i), and causes the calculated difference to be stored as the amount of room-for-improvement $\Delta$Ec(i,k) based on a cycle in the amount-of-room-for-improvement storage section 36 (S45). Then, the cycle use section 42 increments the sampling number k and the phase 1 by 1 (S47), goes back to the step S43 and repeats the above process, until carrying out the above process on all the in-planned-time measured values E'(i,k) transmitted from the planned time use section 40 (S46). When the above process has been carried out on all the in-planned-time measured values E'(i,k) (S46), the cycle use section 42 finishes the operation.

The process shown in Fig. 20 is carried out with respect to each sampling number $\alpha$cycle (i) per one cycle which is stored in the set information storage section 35.

Fig. 21 shows a flow of the process of calculating the amount of room-for-improvement $\Delta$Ed(i,k) based on a rated value. This process is carried out by the rated value use section 43 of the amount-of-room-for-improvement calculation section 31. As illustrated in the drawing, initially, the rated value use section 43 reads a rated value $\gamma$(i) and a set value $\alpha$rate(i) for the rated value from the set information storage section 35, and calculates a reference value Rrate(i) for the rated value using the rated value $\gamma$(i) and the set value $\alpha$rate(i) thus read, in accordance with the aforementioned equation (3) (S50).

Subsequently, the rated value use section 43 initializes the sampling number k to 1 (S51). The rated value use section 43 obtains an in-planned-time measured value E'(i,k) transmitted from the planned time use section 40 (S52), calculates a difference between the in-planned-time measured value E'(i,k) and the reference value Rrate(i), and causes the calculated difference to be stored as the amount of room-for-improvement $\Delta$Ed(i,k) based on a rated value in the amount-of-room-for-improvement storage section 36 (S53). Then, the rated value use section 43 increments the sampling number k by 1 (S55), goes back to the step S52 and repeats the above process, until carrying out the above process on all the in-planned-time measured values E'(i,k) transmitted from the planned time use section 40 (S54). When the above process has been carried out on all the in-planned-time measured values E'(i,k) (S54), the rated value use section 43 finishes the operation.

The following details the step S15 with reference to Fig. 22. Fig. 22 shows a flow of a process of determining an amount of room-for-improvement. This process is carried out by the total-amount-of-room-for-improvement calculation section 32. As illustrated in the drawing, initially, the total-amount-of-room-for-improvement calculation section 32 initializes the device number i to 1 (S60), and initializes the sampling number k to 1 (S61).

Subsequently, the total-amount-of-room-for-improvement calculation section 32 reads, from the amount-of-room-for-improvement storage section 36, amounts of room-for-improvement $\Delta$Ea(i,k)-$\Delta$Ed(i,k) of the target device 11 with the device number i at the sampling number k, and calculates the largest amount $\Delta$Emax(i,k) among the read amounts of room-for-improvement $\Delta Ea(i,k)$-$\Delta Ed(i,k)$ (S62). At the time, the total-amount-of-room-for-improvement calculation section 32 causes the calculate largest amount $\Delta Emax(i,k)$ among the amounts of room-for-improvement to be stored in the amount-of-room-for-improvement storage section 36. Next, the total-amount-of-room-for-improvement calculation section 32 accumulates the calculated largest amount $\Delta Emax(i,k)$ among the amounts of room-for-improvement (S63).

Subsequently, the total amount-of-room-for-improvement calculation section 32 increments the sampling number k by 1 (S65), goes back to the step S62 and repeats the above process, until carrying out the above process on the target device 11 with the device number i with respect to all the sampling numbers k (S64). When the total-amount-of-room-for-improvement calculation section 32 has done the process on the target device 11 with the device number i with respect to all the sampling numbers k (S64), the total-amount-of-room-for-improvement calculation section 32 causes an accumulation of the largest amount $\Delta Emax(i,k)$ among the amounts of room-for-improvement to be stored as a total amount of room-for-improvement $\sum\Delta Emax(i,k)$ of the target device 11 with the device number i in the total-amount-of-room-for-improvement storage section 37.

Next, the total-amount-of-room-for-improvement calculation section 32 increments the device number i by 1 (S68), goes back to the step S61, and repeats the above process, until carrying out the above process with respect to each device number i (S67). When the above process has been carried out with respect to each device number i (S67), the total amount-of-room-for-improvement calculation section 32 finishes the operation.

The present invention is not limited to the description of the embodiments above, but may be altered by a skilled person within the scope of the claims. An embodiment based on a proper combination of technical means disclosed in different embodiments is encompassed in the technical scope of the present invention.

For example, in the above embodiment, an amount of room-for-improvement and a total amount of room-for-improvement are calculated with respect to power consumption and are output in the form of a list. Alternatively, the present invention may be applicable to any energy consumption other than power consumption.

Each block of the energy consumption improvement calculation apparatus 10, the control section 20 in particular, may be realized by hardware logic or may be realized by software by using a CPU as described below.

Namely, the energy consumption improvement calculation apparatus 10 includes: a CPU (central processing unit) for executing a control program for realizing functions of each block; a ROM (read only memory) that stores the program; a RAM (random access memory) that develops the program; a storage device (storage medium) such as a memory in which the program and data are stored; and the like. The object of the present invention can be realized in such a manner that the energy consumption improvement calculation apparatus 10 is provided with a computer-readable storage medium for storing program codes (such as executable program, intermediate code program, and source program) of the control program of the energy consumption improvement calculation apparatus 10 which program serves as software for realizing the functions, and a computer (alternatively, CPU or MPU) reads out and executes the program codes stored in the storage medium.

The storage medium is, for example, tapes such as a magnetic tape and a cassette tape, or discs such as magnetic discs (e.g. a floppy disc® and a hard disc), and optical discs (e.g. CD-ROM, MO, MD, DVD, and CD-R). Further, the storage medium may be cards such as an IC card (including a memory card) and an optical card, or semiconductor memories such as mask ROM, EPROM, EEPROM, and flash ROM.

Further, the energy consumption improvement calculation apparatus 10 may be arranged so as to be connectable to a communication network so that the program code is supplied to the energy consumption improvement calculation apparatus 10 through the communication network. The communication network is not particularly limited. Examples of the communication network include the Internet, intranet, extranet, LAN, ISDN, VAN, CATV communication network, virtual private network, telephone network, mobile communication network, and satellite communication network. Further, a transmission medium that constitutes the communication network is not particularly limited. Examples of the transmission medium include (i) wired lines such as IEEE 1394, USB, power-line carrier, cable TV lines, telephone lines, and ADSL lines and (ii) wireless connections such as IrDA and remote control using infrared ray, Bluetooth®, 802.1.1, HDR, mobile phone network, satellite connections, and terrestrial digital network. Note that the present invention can be also realized by the program codes in the form of a computer data signal embedded in a carrier wave, which is the program that is electrically transmitted.

Industrial Applicability

The energy consumption improvement calculation apparatus of the present invention enables accurately calculating the amount of room-for-improvement of power consumption at a certain measurement time by subtracting, from a measured value at the measurement time, a reference value corresponding to a phase of the measurement time. Accordingly, the energy consumption improvement calculation apparatus of the present invention is applicable not only to power consumption but also to consumption of any energy such as oil.

Reference Signs List

1. Energy conservation assisting system
10. Energy consumption improvement calculation apparatus
11. Target device
20. Control section
21. Storage section
22. Input section
23. Display section
30. Information obtaining section
31. Amount-of-room-for-improvement calculation section
32. Total-amount-of-room-for-improvement calculation section
33. List generating section (list generator)
34. Measured data storage section
35. Set information storage section
36. Amount-of-room-for-improvement storage section
37. Total-amount-of-room-for-improvement storage section
40. Planned time use section (other index user)
41. Variation use section (other index user)
42. Cycle use section.
43. Rated value use section (other index user)
50. Measured data obtaining section
51. Planned time obtaining section
52. In-planned time determining section
53. Selection section
54. Measured data obtaining section
55. Set value obtaining section
56. Average value calculation section
57. Reference value calculation section
58. Subtraction section
60. Measured data obtaining section
61. Set value obtaining section
62. Phase determining section (phase obtainer)
63. Table generator (reference value obtainer)
64. Subtraction section (amount-of-room-for-improvement calculator)
65. Correspondence table
66. Measured data obtaining section
67. Set value obtaining section
68. Reference value calculation section
69. Subtraction section
70. Amount-of-room-for-improvement obtaining section
71. Largest amount selecting section (selector)
72. Accumulation section (total-amount-of-room-for-improvement calculator)

**Claims**

1. An energy consumption improvement calculation apparatus for calculating an amount of room-for-improvement in energy consumption of a target device, the amount of room-for-improvement being an amount of energy consumption by which the energy consumption of the target device is improvable, comprising:

a storage section that stores measured values of the energy consumption, measurement times at which the measured values were measured, and a fluctuating cycle in which the energy consumption varies periodically;
a phase obtainer that obtains a phase of the measurement times corresponding to the fluctuating cycle;
a reference value obtainer that obtains a reference value which is a representing value of plural ones of the measured values which ones were measured at measurement times corresponding to the phase obtained by the phase obtainer; and

an amount-of-room-for-improvement calculator that calculates an amount of room-for-improvement of energy consumption at a given measurement time stored in the storage section by subtracting, from a measured value measured at the given measurement time, a reference value which corresponds to a phase of the given measurement time, the given reference value being obtained by the phase obtainer and the reference value obtainer.

2. The energy consumption improvement calculation apparatus as set forth in claim 1, wherein the reference value obtainer causes a phase of the fluctuating cycle and a reference value corresponding to the phase to be stored in the storage section in relation to the phase of the fluctuating cycle.

3. The energy consumption improvement calculation apparatus as set forth in claim 1 or 2, wherein
the storage section stores therein a plurality of said fluctuating cycles that differ from each other, and
the phase obtainer, the reference value obtainer, and the amount-of-room-for-improvement calculator operate with respect to each of the plurality of different fluctuating cycles.

4. The energy consumption improvement calculation apparatus as set forth in claim 1, wherein the phase obtainer, the reference value obtained, and the amount-of-room-for-improvement calculator operate only with respect to a measurement time in a planned time that defines a period during which the target device is planned to operate.

5. The energy consumption improvement calculation apparatus as set forth in claim 1, further comprising:

one or a plurality of other index users that calculate the amount of room-for-improvement of energy consumption at the given measurement time based on an index other than the fluctuating cycle; and
a selector that selects, as the amount of room-for-improvement of energy consumption at the given measurement time, a largest amount among an amount of room-for-improvement of energy consumption calculated by each of said one or a plurality of other index users and the amount of room-for-improvement of energy consumption calculated by the amount-of-room-for-improvement calculator.

6. The energy consumption improvement calculation apparatus as set forth in claim 5, further comprising a total-amount-of-room-for-improvement calculator that calculates a total amount of room-for-improvement of energy consumption corresponding to a sum obtained by summing the largest amount selected by the selector with respect to each measurement time in a specified period.

7. The energy consumption improvement calculation apparatus as set forth in claim 6, wherein
the target device includes a plurality of target devices,
the phase obtainer, the reference value obtainer, the amount-of-room-for-improvement calculator, said one or a plurality of other index users, the selector, and the total-amount-of-room-for-improvement calculator operate with respect to each of the plurality of target devices, and
the energy consumption improvement calculation apparatus further comprises a list generator that generates a list in which device identification information items respectively identifying the plurality of target devices are listed in an order of largeness of the total amount of room-for-improvement of energy consumption calculated by the total-amount-of-room-for-improvement calculator for each of the respective target devices.

8. A method for controlling an energy consumption improvement calculation apparatus that calculates an amount of room-for-improvement in energy consumption of a target device, the amount of room-for-improvement being an amount of energy consumption by which the energy consumption of the target device is improvable, the energy consumption improvement calculation apparatus including a storage section that stores measured values of the energy consumption and measurement times at which the measured values were measured,
the method comprising the steps of:

(i) obtaining a phase of the measurement times with respect to a fluctuating cycle in which the energy consumption varies periodically, the fluctuating cycle being stored in the storage section;
(ii) obtaining a reference value which is a representing value of plural ones of the measured values which ones were measured at measurement times corresponding to the phase obtained in the step (i); and
(iii) calculating an amount of room-for-improvement of energy consumption at a given measurement time stored in the storage section by subtracting, from a measured value measured at the given measurement time, a reference value which corresponds to a phase of the given measurement time, the given reference value being obtained in the steps (i) and (ii).

9. An energy consumption improvement calculation program for operating an energy consumption improvement calculation apparatus that calculates an amount of room-for-improvement in energy consumption of a target device, the amount of room-for-improvement being an amount of energy consumption by which the energy consumption of the target device is improvable, the energy consumption improvement calculation apparatus including a storage section that stores measured values of the energy consumption and measurement times at which the measured values were measured,

the program causing a computer to carry out the steps of:

(i) obtaining a phase of the measurement times with respect to a fluctuating cycle in which the energy consumption varies periodically, the fluctuating cycle being stored in the storage section;

(ii) obtaining a reference value which is a representing value of plural ones of the measured values which ones were measured at measurement times corresponding to the phase obtained in the step (i); and

(iii) calculating an amount of room-for-improvement of energy consumption at a given measurement time stored in the storage section by subtracting, from a measured value measured at the given measurement time, a reference value which corresponds to a phase of the given measurement time, the given reference value being obtained in the steps (i) and (ii).

F I G. 1

AMOUNT-OF-ROOM-FOR-IMPROVEMENT STORAGE SECTION ~36

AMOUNT OF ROOM-FOR-IMPROVEMENT BASED ON CYCLE $\Delta E_a(i,k)$

CYCLE USE SECTION ~42

MEASURED DATA OBTAINING SECTION ~60

SET VALUE OBTAINING SECTION ~61

PHASE DETERMINING SECTION ~62

TABLE GENERATING SECTION ~63

SUBTRACTION SECTION ~64

E'

E'

k

CORRESPONDENCE TABLE BETWEEN PHASE AND REFERENCE VALUE ~65

STORAGE SECTION ~21

MEASURED DATA IN PLANNED TIME $(E'(i,k), t'(k))$

SET INFORMATION STORAGE SECTION ~35

SAMPLING NUMBER PER ONE CYCLE $\alpha_{cycle}(i)$

19

FIG. 2

F I G. 3

EP 2 345 991 A1

F I G. 4

AMOUNT-OF-ROOM-FOR-IMPROVEMENT CALCULATION SECTION — 31

AMOUNT-OF-ROOM-FOR-IMPROVEMENT STORAGE SECTION — 36

MEASURED DATA STORAGE SECTION — 34

MEASURED VALUE OF POWER CONSUMPTION — $E(i,k)$

MEASUREMENT TIME — $t(k)$

SET INFORMATION STORAGE SECTION — 35

PLANNED TIME — $Pt(i)$

OTHER SET INFORMATION

PLANNED TIME USE SECTION — 40

MEASURED DATA IN PLANNED TIME — $E'(i,k),\ t'(k)$

VARIATION USE SECTION — 41

CYCLE USE SECTION — 42

RATED VALUE USE SECTION — 43

AMOUNT-OF-ROOM-FOR-IMPROVEMENT BASED ON PLANNED TIME — $\Delta E_a(i,k)$

AMOUNT-OF-ROOM-FOR-IMPROVEMENT BASED ON VARIATION — $\Delta E_b(i,k)$

AMOUNT-OF-ROOM-FOR-IMPROVEMENT BASED ON CYCLE — $\Delta E_c(i,k)$

AMOUNT-OF-ROOM-FOR-IMPROVEMENT BASED ON RATED VALUE — $\Delta E_d(i,k)$

EP 2 345 991 A1

22

F I G. 5

F I G . 6

| No. | MEASUREMENT TIME | MEASURED VALUE | AMOUNT OF ROOM-FOR-IMPROVEMENT BASED ON PLANNED TIME | AMOUNT OF ROOM-FOR-IMPROVEMENT BASED ON VARIATION | $\Delta E_c(i,k)$ | | | AMOUNT OF ROOM-FOR-IMPROVEMENT BASED ON RATED VALUE (YEAR) | LARGEST AMOUNT AMONG AMOUNTS OF ROOM-FOR-IMPROVEMENT |
| | | | | | AMOUNT OF ROOM-FOR-IMPROVEMENT BASED ON CYCLE (DAY) | AMOUNT OF ROOM-FOR-IMPROVEMENT BASED ON CYCLE (WEEK) | AMOUNT OF ROOM-FOR-IMPROVEMENT BASED ON CYCLE (YEAR) | | |
| k | t(k) | $\Delta E(i,k)$ | $\Delta E_a(i,k)$ | $\Delta E_b(i,k)$ | | | | $\Delta E_d(i,k)$ | $\Delta E_{max}(i,k)$ |
|---|---|---|---|---|---|---|---|---|---|
| 1 | 2007/04/06 0:30 | 31 | 31 | 0 | 0 | 0 | 0 | 0 | 31 |
| 2 | 2007/04/06 1:00 | 26 | 26 | 0 | 0 | 0 | 0 | 0 | 26 |
| 3 | 2007/04/06 1:30 | 33 | 33 | 0 | 0 | 0 | 0 | 0 | 33 |
| 4 | 2007/04/06 2:00 | 31 | 31 | 0 | 0 | 0 | 0 | 0 | 31 |
| 5 | 2007/04/06 2:30 | 27 | 27 | 0 | 0 | 0 | 0 | 0 | 27 |
| 6 | 2007/04/06 3:00 | 30 | 30 | 0 | 0 | 0 | 0 | 0 | 30 |
| 7 | 2007/04/06 3:30 | 25 | 25 | 0 | 0 | 0 | 0 | 0 | 25 |
| 8 | 2007/04/06 4:00 | 32 | 32 | 0 | 0 | 0 | 0 | 0 | 32 |
| 9 | 2007/04/06 4:30 | 37 | 37 | 0 | 0 | 0 | 0 | 0 | 37 |
| 10 | 2007/04/06 5:00 | 26 | 26 | 0 | 0 | 0 | 0 | 0 | 26 |
| 11 | 2007/04/06 5:30 | 29 | 29 | 0 | 0 | 0 | 0 | 0 | 29 |
| 12 | 2007/04/06 6:00 | 19 | 19 | 0 | 0 | 0 | 0 | 0 | 19 |
| 13 | 2007/04/06 6:30 | 32 | 32 | 0 | 0 | 0 | 0 | 0 | 32 |
| 14 | 2007/04/06 7:00 | 32 | 32 | 0 | 0 | 0 | 0 | 0 | 32 |
| 15 | 2007/04/06 7:30 | 38 | 38 | 0 | 0 | 0 | 0 | 0 | 38 |
| 16 | 2007/04/06 8:00 | 1306 | 1306 | 0 | 0 | 0 | 0 | 0 | 1306 |
| 17 | 2007/04/06 8:30 | 2396 | 2396 | 0 | 0 | 0 | 0 | 0 | 2396 |
| 18 | 2007/04/06 9:00 | 4030 | 0 | 652 | 1282 | 1167 | 1463 | 1030 | 1463 |
| 19 | 2007/04/06 9:30 | 4059 | 0 | 681 | 1590 | 1333 | 1689 | 1059 | 1689 |
| 20 | 2007/04/06 10:00 | 3535 | 0 | 157 | 1240 | 911 | 1294 | 535 | 1294 |
| 21 | 2007/04/06 10:30 | 3297 | 0 | 0 | 706 | 771 | 949 | 297 | 949 |
| 22 | 2007/04/06 11:00 | 4158 | 0 | 780 | 1139 | 1367 | 1486 | 1158 | 1486 |
| 23 | 2007/04/06 11:30 | 3733 | 0 | 355 | 469 | 736 | 852 | 733 | 852 |

EP 2 345 991 A1

F I G. 7

| k / No. | t(k) MEASUREMENT TIME | ΔE(i,k) MEASURED VALUE | ΔEa(i,k) AMOUNT OF ROOM-FOR-IMPROVEMENT BASED ON PLANNED TIME | ΔEb(i,k) AMOUNT OF ROOM-FOR-IMPROVEMENT BASED ON VARIATION | ΔEc(i,k) AMOUNT OF ROOM-FOR-IMPROVEMENT BASED ON CYCLE (DAY) | ΔEc(i,k) AMOUNT OF ROOM-FOR-IMPROVEMENT BASED ON CYCLE (WEEK) | ΔEc(i,k) AMOUNT OF ROOM-FOR-IMPROVEMENT BASED ON CYCLE (YEAR) | ΔEd(i,k) AMOUNT OF ROOM-FOR-IMPROVEMENT BASED ON RATED VALUE (YEAR) | ΔEmax(i,k) LARGEST AMOUNT AMONG AMOUNTS OF ROOM-FOR-IMPROVEMENT |
|---|---|---|---|---|---|---|---|---|---|
| 24 | 2007/04/06 12:00 | 3331 | 0 | 0 | 447 | 306 | 629 | 331 | 629 |
| 25 | 2007/04/06 12:30 | 1380 | 0 | 0 | 379 | 382 | 464 | 0 | 464 |
| 26 | 2007/04/06 13:00 | 2208 | 0 | 0 | 402 | 693 | 674 | 0 | 693 |
| 27 | 2007/04/06 13:30 | 2845 | 0 | 0 | 277 | 674 | 656 | 0 | 674 |
| 28 | 2007/04/06 14:00 | 2857 | 0 | 0 | 423 | 412 | 621 | 0 | 621 |
| 29 | 2007/04/06 14:30 | 3298 | 0 | 0 | 753 | 735 | 958 | 298 | 958 |
| 30 | 2007/04/06 15:00 | 3361 | 0 | 0 | 794 | 911 | 1056 | 361 | 1056 |
| 31 | 2007/04/06 15:30 | 3290 | 0 | 0 | 625 | 844 | 938 | 290 | 938 |
| 32 | 2007/04/06 16:00 | 3854 | 0 | 476 | 1084 | 1302 | 1405 | 854 | 1405 |
| 33 | 2007/04/06 16:30 | 4170 | 0 | 792 | 1052 | 1117 | 1339 | 1170 | 1339 |
| 34 | 2007/04/06 17:00 | 4010 | 0 | 632 | 1073 | 1345 | 1431 | 1010 | 1431 |
| 35 | 2007/04/06 17:30 | 3391 | 0 | 13 | 629 | 845 | 949 | 391 | 949 |
| 36 | 2007/04/06 18:00 | 2967 | 2967 | 0 | 0 | 0 | 0 | 0 | 2967 |
| 37 | 2007/04/06 18:30 | 2909 | 2909 | 0 | 0 | 0 | 0 | 0 | 2909 |
| 38 | 2007/04/06 19:00 | 2915 | 2915 | 0 | 0 | 0 | 0 | 0 | 2915 |
| 39 | 2007/04/06 19:30 | 2188 | 2188 | 0 | 0 | 0 | 0 | 0 | 2188 |
| 40 | 2007/04/06 20:00 | 1823 | 1823 | 0 | 0 | 0 | 0 | 0 | 1823 |
| 41 | 2007/04/06 20:30 | 1496 | 1496 | 0 | 0 | 0 | 0 | 0 | 1496 |
| 42 | 2007/04/06 21:00 | 1632 | 1632 | 0 | 0 | 0 | 0 | 0 | 1632 |
| 43 | 2007/04/06 21:30 | 1079 | 1079 | 0 | 0 | 0 | 0 | 0 | 1079 |
| 44 | 2007/04/06 22:00 | 62 | 62 | 0 | 0 | 0 | 0 | 0 | 62 |
| 45 | 2007/04/06 22:30 | 41 | 41 | 0 | 0 | 0 | 0 | 0 | 41 |
| 46 | 2007/04/06 23:00 | 52 | 52 | 0 | 0 | 0 | 0 | 0 | 52 |
| 47 | 2007/04/06 23:30 | 30 | 30 | 0 | 0 | 0 | 0 | 0 | 30 |
| 48 | 2007/04/07 0:00 | 30 | 30 | 0 | 0 | 0 | 0 | 0 | 30 |

F I G. 8

| $i$ | | $\gamma(i)$ | $\alpha_{rate}(i)$ | $\alpha_{cycle}(i)$ | $\alpha_{ave}(i)$ | $At(i)$ | $Pt(i)$ |
|---|---|---|---|---|---|---|---|
| No. | DEVICE NAME | RATED VALUE (EX. RATED POWER) | SET VALUE FOR RATED VALUE | SAMPLING NUMBER PER ONE CYCLE | SET VALUE FOR VARIATION | ANALYSIS TARGET PERIOD | PLANNED OPERATION TIME |
| 1 | DEVICE A | 100 | 0.8 | 48,336 | 0.4 | 2008/04/01 2008/04/30 | 9:00 – 23:00 |
| 2 | DEVICE B | 120 | 0.3 | 48 | 0.35 | 2008/04/01 2008/04/30 | 0:00 – 24:00 |
| 3 | DEVICE C | 1500 | 0.4 | 336,1488 | 0.2 | 2008/04/01 2008/04/30 | 8:30 – 17:30 |
| . . . | . . . | . . . | . . . | . . . | . . . | . . . | . . . |

EP 2 345 991 A1

FIG. 10

F I G. 1 1

EP 2 345 991 A1

F I G . 1 2

**32** — WHOLE-AMOUNT-OF-ROOM-FOR-IMPROVEMENT CALCULATION SECTION

**70** AMOUNT-OF-ROOM-FOR-IMPROVEMENT OBTAINING SECTION

**71** LARGEST AMOUNT SELECTING SECTION

**72** ACCUMULATION SECTION

AMOUNTS OF-ROOM-FOR-IMPROVEMENT

$\Delta E_a(i,k) \sim \Delta E_d(i,k)$

$\Delta E_{\max}(i,k)$

LARGEST AMOUNT AMONG AMOUNTS OF-ROOM-FOR-IMPROVEMENT

AMOUNT-OF-ROOM-FOR-IMPROVEMENT STORAGE SECTION

**36**

$\sum_k \Delta E_{\max}(i,k)$

WHOLE AMOUNT OF ROOM-FOR-IMPROVEMENT

WHOLE-AMOUNT-OF-ROOM-FOR-IMPROVEMENT STORAGE SECTION

**37**

| $i$ | | $\sum_k \Delta E_{max}(i,k)$ | $\sum_k \Delta E_a(i,k)$ | $\sum_k \Delta E_b(i,k)$ | $\sum_k \Delta E_c(i,k)$ | | | $\sum_k \Delta E_d(i,k)$ |
|---|---|---|---|---|---|---|---|---|
| No. | DEVICE NAME | WHOLE AMOUNT OF ROOM-FOR-IMPROVEMENT | SUM OF AMOUNTS OF ROOM-FOR-IMPROVEMENT OUTSIDE PLANNED TIME | SUM OF AMOUNTS OF ROOM-FOR-IMPROVEMENT BASED ON VARIATION | SUM OF AMOUNTS OF ROOM-FOR-IMPROVEMENT BASED ON CYCLE (DAY) | SUM OF AMOUNTS OF ROOM-FOR-IMPROVEMENT BASED ON CYCLE (WEEK) | SUM OF AMOUNTS OF ROOM-FOR-IMPROVEMENT BASED ON CYCLE (YEAR) | SUM OF AMOUNTS OF ROOM-FOR-IMPROVEMENT BASED ON RATED VALUE |
| 1 | DEVICE A | 4200 | 3450 | 300 | 800 | 600 | 500 | 400 |
| 2 | DEVICE B | 6400 | 5450 | 400 | 1000 | 900 | 700 | 100 |
| 3 | DEVICE C | 19500 | 13450 | 6400 | 1300 | 1200 | 1000 | 400 |
| 4 | DEVICE D | 9500 | 6450 | 3200 | 300 | 1000 | 400 | 1000 |
| . | . | . | . | . | . | . | . | . |
| . | . | . | . | . | . | . | . | . |
| . | . | . | . | . | . | . | . | . |

F I G . 1 4

| $i$ | | $\sum_{k} \Delta E_{max}(i,k)$ | $\sum_{k} \Delta E_{a}(i,k)$ | $\sum_{k} \Delta E_{b}(i,k)$ | $\sum_{k} \Delta E_{c}(i,k)$ | | | $\sum_{k} \Delta E_{d}(i,k)$ |
|---|---|---|---|---|---|---|---|---|
| No. | DEVICE NAME | WHOLE AMOUNT OF ROOM-FOR-IMPROVEMENT | SUM OF AMOUNTS OF ROOM-FOR-IMPROVEMENT OUTSIDE PLANNED TIME | SUM OF AMOUNTS OF ROOM-FOR-IMPROVEMENT BASED ON VARIATION | SUM OF AMOUNTS OF ROOM-FOR-IMPROVEMENT BASED ON CYCLE (DAY) | SUM OF AMOUNTS OF ROOM-FOR-IMPROVEMENT BASED ON CYCLE (WEEK) | SUM OF AMOUNTS OF ROOM-FOR-IMPROVEMENT BASED ON CYCLE (YEAR) | SUM OF AMOUNTS OF ROOM-FOR-IMPROVEMENT BASED ON RATED VALUE |
| 3 | DEVICE C | 19500 | 13450 | 6400 | 1300 | 1200 | 1000 | 400 |
| 4 | DEVICE D | 9500 | 6450 | 3200 | 300 | 1000 | 400 | 1000 |
| 6 | DEVICE F | 8750 | 5040 | 4400 | 400 | 1300 | 600 | 700 |
| 2 | DEVICE B | 6400 | 5450 | 400 | 1000 | 900 | 700 | 100 |
| . | . | . | . | . | . | . | . | . |
| . | . | . | . | . | . | . | . | . |
| . | . | . | . | . | . | . | . | . |

F I G . 1 5

| ORDER | POWER TERMINAL INFORMATION | WHOLE AMOUNT OF IMPROVABLE POWER CONSUMPTION (RATE) | VIEWPOINT 1 | VIEWPOINT 2 | VIEWPOINT 3 | VIEWPOINT 4 | VIEWPOINT 5 |
|---|---|---|---|---|---|---|---|
| 1 | DEVICE 20 | 11,337[kWh] (46.7[%]) | 10,438 [kWh] OF ACTUAL POWER CONSUMPTION (43.0 [%]) | 7 [kWh] OF ACTUAL POWER CONSUMPTION (0.0 [%]) | 791 [kWh] OF ACTUAL POWER CONSUMPTION (3.3 [%]) | 779 [kWh] OF ACTUAL POWER CONSUMPTION (3.2 [%]) | 0 [kWh] OF ACTUAL POWER CONSUMPTION (0.0 [%]) |
| 2 | DEVICE 38 | 8,648[kWh] (38.2[%]) | 8,255 [kWh] OF ACTUAL POWER CONSUMPTION (36.5 [%]) | 12 [kWh] OF ACTUAL POWER CONSUMPTION (0.1 [%]) | 288 [kWh] OF ACTUAL POWER CONSUMPTION (1.3 [%]) | 298 [kWh] OF ACTUAL POWER CONSUMPTION (1.3 [%]) | 0 [kWh] OF ACTUAL POWER CONSUMPTION (0.0 [%]) |
| 3 | DEVICE 2 | 6,702[kWh] (66.3[%]) | 3,766 [kWh] OF ACTUAL POWER CONSUMPTION (37.3 [%]) | 175 [kWh] OF ACTUAL POWER CONSUMPTION (1.7 [%]) | 2,772 [kWh] OF ACTUAL POWER CONSUMPTION (27.4 [%]) | 2,684 [kWh] OF ACTUAL POWER CONSUMPTION (26.6 [%]) | 0 [kWh] OF ACTUAL POWER CONSUMPTION (0.0 [%]) |
| 4 | DEVICE 15 | 5,145[kWh] (71.9[%]) | 2,720 [kWh] OF ACTUAL POWER CONSUMPTION (38.0 [%]) | 163 [kWh] OF ACTUAL POWER CONSUMPTION (2.3 [%]) | 2,291 [kWh] OF ACTUAL POWER CONSUMPTION (32.0 [%]) | 2,204 [kWh] OF ACTUAL POWER CONSUMPTION (30.8 [%]) | 0 [kWh] OF ACTUAL POWER CONSUMPTION (0.0 [%]) |
| 5 | DEVICE 6 | 4,380[kWh] (72.2[%]) | 1,952 [kWh] OF ACTUAL POWER CONSUMPTION (32.2 [%]) | 135 [kWh] OF ACTUAL POWER CONSUMPTION (2.2 [%]) | 2,314 [kWh] OF ACTUAL POWER CONSUMPTION (38.2 [%]) | 2,230 [kWh] OF ACTUAL POWER CONSUMPTION (36.8 [%]) | 0 [kWh] OF ACTUAL POWER CONSUMPTION (0.0 [%]) |
| 6 | DEVICE 61 | 4,345[kWh] (78.6[%]) | 1,974 [kWh] OF ACTUAL POWER CONSUMPTION (35.7 [%]) | 165 [kWh] OF ACTUAL POWER CONSUMPTION (3.0 [%]) | 2,270 [kWh] OF ACTUAL POWER CONSUMPTION (41.1 [%]) | 2,172 [kWh] OF ACTUAL POWER CONSUMPTION (39.3 [%]) | 0 [kWh] OF ACTUAL POWER CONSUMPTION (0.0 [%]) |

FIG. 16

F I G . 1 7

FIG. 18

```
          ┌─────────────────────────┐
          │  CALCULATE AMOUNT OF     │
          │  ROOM-FOR-IMPROVEMENT    │
          │  BASED ON PLANNED TIME   │
          └─────────────────────────┘
                      │
                      │  S20
          ┌─────────────────────────┐
          │         k = 1           │
          └─────────────────────────┘
                      │
                      │  S21                          S26
          ┌─────────────────────────┐      ┌──────────────┐
          │   READ MEASURED VALUE    │◄─────│   k = k + 1  │
          │  E(i,k) OF MEASURED DATA │      └──────────────┘
          │   OF POWER CONSUMPTION   │            ▲
          │ AND MEASUREMENT TIME t(k)│            │
          └─────────────────────────┘            │
                      │                    S23    │
                      │  S22        ┌───────────────────┐
                    ╱─────╲   YES   │ USE MEASURED VALUE│
          ┌────────╱        ╲──────►│  E'(i,k) IN PLANNED│
          │ MEASUREMENT TIME t(k)   │ TIME FOR CALCULATING│
          │ IS IN PLANNED TIME?     │ OTHER AMOUNT OF    │
          └────────╲        ╱       │ ROOM-FOR-IMPROVEMENT│
                    ╲─────╱         └───────────────────┘
                      │ NO                  │
                      │  S24                │
          ┌─────────────────────────┐      │
          │ STORE MEASURED VALUE     │      │
          │ OUTSIDE PLANNED TIME AS  │      │
          │ "AMOUNT OF               │      │
          │ ROOM-FOR-IMPROVEMENT     │      │
          │ ΔEa(i,k) BASED ON        │      │
          │ PLANNED TIME"            │      │
          └─────────────────────────┘      │
                      │◄───────────────────┘
                      │  S25
                    ╱─────╲
          ┌────────╱        ╲──── NO ──────────┐
          │  ALL TARGET DATA        │          │
          │  IS READ?               │          │ (to S26)
          └────────╲        ╱       │
                    ╲─────╱
                      │ YES
                ┌──────────┐
                │   END    │
                └──────────┘
```

FIG. 19

```
        ┌─────────────────────┐
        │  CALCULATE AMOUNT OF │
        │ ROOM-FOR-IMPROVEMENT │
        │  BASED ON VARIATION  │
        └─────────────────────┘
                   │
                   │                           ╭S30
        ┌──────────────────────────────────┐
        │      CALCULATE AVERAGE $\mu(i)$ OF │
        │ MEASURED VALUE E'$(i,k)$ IN PLANNED TIME │
        └──────────────────────────────────┘
                   │
                   │                           ╭S31
        ┌──────────────────────────────────┐
        │        CALCULATE REFERENCE        │
        │    VALUE $R_{ave}(i)$ BY USING    │
        │    AVERAGE $\mu(i)$ AND SET VALUE │
        │    $\alpha_{ave}(i)$ FOR VARIATION │
        └──────────────────────────────────┘
                   │
                   │            ╭S32
              ┌─────────┐
              │  $k=1$  │
              └─────────┘
                   │
                   ▼
   ╭S35                                        ╭S33
┌──────────┐   ┌──────────────────────────────────┐
│ $k=k+1$  │   │ CALCULATE DIFFERENCE BETWEEN REFERENCE │
└──────────┘   │ VALUE $R_{ave}(i)$ AND MEASURED VALUE E'$(i,k)$ │
     ▲         │ AND STORE THE DIFFERENCE AS  AMOUNT OF │
     │         │   ROOM-FOR-IMPROVEMENT $\Delta Eb(i,k)$ │
     │         │         BASED ON VARIATION        │
     │         └──────────────────────────────────┘
     │                          │
     │                          ▼           ╭S34
     │          ╱────────────────────────────╲
     │   NO    ╱    PROCESS ON ALL MEASURED    ╲
     └────────<     VALUES E'$(i,k)$ COMPLETED? >
              ╲                                ╱
               ╲────────────────────────────╱
                          │
                          │ YES
                     ┌─────────┐
                     │   END   │
                     └─────────┘
```

FIG. 20

```
        ┌─────────────────────────┐
        │   CALCULATE AMOUNT OF    │
        │  ROOM-FOR-IMPROVEMENT    │
        │     BASED ON CYCLE       │
        └─────────────────────────┘
                     │
                     ▼                              ╭─ S40
        ┌─────────────────────────────────────┐
        │        OBTAIN ALL MEASURED          │
        │   VALUES E'(i,k) IN PLANNED TIME    │
        └─────────────────────────────────────┘
                     │
                     ▼                              ╭─ S41
    ┌──────────────────────────────────────────────────┐
    │  CLASSIFY MEASURED VALUES E'(i,k) OF SAMPLING     │
    │  NUMBER αcycle(i) PER ONE CYCLE ACCORDING TO      │
    │  PHASE, CALCULATE REFERENCE VALUE Rcycle(i)       │
    │  WHICH IS AVERAGE OF CLASSIFIED MEASURED          │
    │  VALUES E'(i,k) WITH RESPECT TO EACH PHASE l,     │
    │  AND STORE THE AVERAGE AND THE PHASE l IN SUCH A  │
    │  MANNER THAT THE AVERAGE IS RELATED TO THE PHASE l│
    └──────────────────────────────────────────────────┘
                     │
                     ▼              ╭─ S42
            ┌──────────────────┐
            │    k=1, l=1      │
            └──────────────────┘
                     │
                     ▼
    ┌──────────────────────────────────────────────────┐
    │                                    ╭─ S43         │         ╭─ S44
    │          ◇ l > αcycle(i) ? ◇────YES────▶ ┌──────────┐
    │                                          │   l=1    │
    │               NO                         └──────────┘
    │                │◀───────────────────────────┘
    │                ▼                   ╭─ S45
    │  ┌──────────────────────────────────────┐
    │  │ CALCULATE DIFFERENCE BETWEEN REFERENCE│
    │  │ VALUE Rcycle(i) AND MEASURED VALUE    │
    │  │ E'(i,k) AND STORE THE DIFFERENCE AS   │
    │  │ AMOUNT OF ROOM-FOR-IMPROVEMENT        │
    │  │ ΔEc(i,k) BASED ON CONSUMPTION CYCLE   │
    │  └──────────────────────────────────────┘
    │                │                   ╭─ S46
    │  ╭─ S47        ▼
  ┌────────────┐  ◇ PROCESS ON ALL MEASURED ◇
  │  k=k+1     │◀─NO─◇ VALUES E'(i,k) COMPLETED? ◇
  │  l=l+1     │
  └────────────┘        YES
                         │
                         ▼
                    ┌─────────┐
                    │   END   │
                    └─────────┘
```

F I G. 2 1

F I G. 2 2

```
            ╭──────────────────╮
            │     DETERMINE     │
            │ ROOM-FOR-IMPROVEMENT │
            ╰──────────────────╯
                     │
              ┌────────────┐  ⌐S60
              │    i = 1    │
              └────────────┘
                     │
              ┌────────────┐  ⌐S61
              │    k = 1    │
              └────────────┘
                     │
    ┌──────────────────────────────────────┐ ⌐S62
    │        OBTAIN LARGEST AMOUNT          │
    │  ΔEmax(i,k) AMONG AMOUNTS OF          │
    │ ROOM-FOR-IMPROVEMENT FOR DEVICE NUMBER i │
    │        AND SAMPLING NUMBER k          │
    └──────────────────────────────────────┘
                     │
    ┌──────────────────────────────────────┐ ⌐S63
    │  ACCUMULATE LARGEST AMOUNT  ΔEmax(i,k) │
    └──────────────────────────────────────┘
                     │
   S65             ◇ S64
 ┌──────────┐  NO  ╱ PROCESS COMPLETED ╲
 │ k = k+1  │◄─────│ WITH RESPECT TO ALL DEVICE │
 └──────────┘      ╲ NUMBERS i AND SAMPLING ╱
                    ╲    NUMBERS k?    ╱
                        │ YES
    ┌──────────────────────────────────────┐ ⌐S66
    │       STORE ACCUMULATED AMOUNT OF     │
    │  ΔEmax(i,k) AS AMOUNT OF              │
    │      ROOM-FOR-IMPROVEMENT            │
    │  Σ ΔEmax(i,k) FOR DEVICE i           │
    └──────────────────────────────────────┘
                     │
   S68             ◇ S67
 ┌──────────┐  NO  ╱ PROCESS COMPLETED WITH ╲
 │ i = i+1  │◄─────│ RESPECT TO ALL DEVICE │
 └──────────┘      ╲   NUMBERS i?   ╱
                        │ YES
                   ╭──────────╮
                   │   END    │
                   ╰──────────╯
```

F I G. 2 3

## INTERNATIONAL SEARCH REPORT

International application No.

PCT/JP2009/005439

| A. CLASSIFICATION OF SUBJECT MATTER |
|---|
| *G06Q50/00*(2006.01)i, *H02J3/00*(2006.01)i |

According to International Patent Classification (IPC) or to both national classification and IPC

| B. FIELDS SEARCHED |
|---|
| Minimum documentation searched (classification system followed by classification symbols) <br> G06Q50/00, H02J3/00 |

Documentation searched other than minimum documentation to the extent that such documents are included in the fields searched

| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2007-172406 A (E-cubic Co., Ltd.), 05 July 2007 (05.07.2007), entire text; fig. 1 to 39 (Family: none) | 1-9 |
| Y | JP 2006-349483 A (Kosumoraifu Kabushiki Kaisha), 28 December 2006 (28.12.2006), entire text; fig. 1 to 11 (Family: none) | 1-9 |
| Y | JP 2001-312523 A (Daikin Industries, Ltd.), 09 November 2001 (09.11.2001), entire text; fig. 1 to 10 (Family: none) | 1-9 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search <br> 06 November, 2009 (06.11.09) | Date of mailing of the international search report <br> 17 November, 2009 (17.11.09) |
|---|---|
| Name and mailing address of the ISA/ <br> Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/005439 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 3115226 U  (Yusuke KOJIMA),<br>04 November 2005 (04.11.2005),<br>entire text; fig. 1 to 14<br>(Family: none) | 1-9 |

Form PCT/ISA/210 (continuation of second sheet) (April 2007)

**EP 2 345 991 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007172406 A